(19) Europäisches Patentamt
European Patent Office
Office européen des brevets

(11) **EP 3 887 450 B1**

(12) **EUROPEAN PATENT SPECIFICATION**

(45) Date of publication and mention of the grant of the patent:
**25.09.2024 Bulletin 2024/39**

(21) Application number: **19821228.4**

(22) Date of filing: **25.11.2019**

(51) International Patent Classification (IPC):
***C08L 69/00*** *(2006.01)*

(52) Cooperative Patent Classification (CPC):
(C-Sets available)
**C08K 5/372; C08G 64/081; C08G 64/14; C08K 5/0041** (Cont.)

(86) International application number:
**PCT/US2019/062920**

(87) International publication number:
**WO 2020/112591 (04.06.2020 Gazette 2020/23)**

# (54) SULFUR-STABILIZED THERMOPLASTIC COMPOSITIONS, METHODS OF MAKING, AND ARTICLES FORMED THEREFROM

SCHWEFELSTABILISIERTE THERMOPLASTISCHE ZUSAMMENSETZUNGEN, VERFAHREN ZUR HERSTELLUNG UND DARAUS GEFORMTE ARTIKEL

COMPOSITIONS THERMOPLASTIQUES STABILISÉES AU SOUFRE, PROCÉDÉS DE FABRICATION ET ARTICLES FORMÉS À PARTIR DE CELLES-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2018 EP 18209602**

(43) Date of publication of application:
**06.10.2021 Bulletin 2021/40**

(73) Proprietor: **SHPP Global Technologies B.V.**
**4612 PX Bergen op Zoom (NL)**

(72) Inventors:
- **MAHOOD, James Alan**
  **Mt. Vernon, Indiana 47620 (US)**
- **HOOVER, James Franklin**
  **Mt. Vernon, Indiana 47620 (US)**
- **CALVERAS, Jordi**
  **Mt. Vernon, Indiana 47620 (US)**
- **SYBERT, Paul Dean**
  **Mt. Vernon, Indiana 47620 (US)**

(74) Representative: **Balder IP Law, S.L.**
**Paseo de la Castellana 93**
**5ª planta**
**28046 Madrid (ES)**

(56) References cited:
**WO-A1-2014/036254**
**WO-A1-2018/020425**
**US-A1- 2014 295 363**
**US-B2- 7 557 153**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/0041, C08L 69/00;**
**C08K 5/372, C08L 69/00**

## Description

BACKGROUND

This disclosure relates to stabilized thermoplastic compositions, methods of making the compositions, and articles formed therefrom, such as lenses.

Polycarbonates are useful in the manufacture of articles for a wide range of applications, from automotive parts to electronic appliances to lenses for cell phones and sensors. Because of their broad use, particularly in automotive, lighting, and lens applications, it is desirable to provide polycarbonates that have high clarity (high light transmission), low color, and good processability. This can be difficult to achieve when the monomers used in the manufacture of the polycarbonates have structures that are more susceptible to oxidation, such as monomers that contain tertiary or benzylic hydrogens. It would be a further advantage if the thermoplastic compositions had high heat resistance. There is accordingly remains a need for polycarbonates with improved thermal performance such as high heat deflection temperature, in combination with high clarity, low color, and good processability.

SUMMARY

A thermoplastic composition is provided, comprising: a copolycarbonate comprising 2-95 mol% of high heat carbonate units derived from a high heat aromatic dihydroxy monomer, wherein a polycarbonate homopolymer derived from the high heat aromatic dihydroxy monomer has a glass transition temperature of 175-330°C determined by differential scanning calorimetry as per ASTM D3418 with a 20°C/min heating rate, and 5-98 mol% of low heat carbonate units derived from a low heat aromatic monomer, wherein a polycarbonate homopolymer derived from the low heat aromatic monomer has a glass transition temperature of less than 170°C determined by differential scanning calorimetry as per ASTM D3418 with a 20°C/min heating rate, each based on the sum of the moles of the carbonate units; and a sulfur-containing stabilizer compound, wherein the sulfur-containing stabilizer compound is a thioether carboxy compound, a thioether dicarboxy compound, a thioether ester compound, or a combination thereof, and wherein the sulfur-containing stabilizer compound is present in an amount effective to provide 5-50 ppm by weight of added sulfur, based on the total parts by weight of the copolycarbonate, wherein a source of the added sulfur is the sulfur-containing stabilizer.

A method for the manufacture of the thermoplastic composition comprises polymerizing a composition comprising: 2-95 mol% of high heat aromatic dihydroxy monomer, and 5-98 mol% of low heat aromatic monomer, preferably bisphenol A, each based on the sum of the moles of the carbonate units, wherein the sulfur-containing stabilizer compound is present in an amount effective to provide 5-50 ppm by weight of added sulfur, based on the total parts by weight of the copolycarbonate. Alternatively, the sulfur-containing stabilizer compound can be added to the high heat polycarbonate after manufacture.

An article comprising the thermoplastic composition is described. In an aspect, the article can be an optical article such as a lens, optionally a hard coated lens. In yet another aspect, a metallized article is provided comprising the above-described thermoplastic composition. In still another aspect, a method of manufacture of an article comprises molding, extruding, or shaping the above-described thermoplastic composition into an article.

The above described and other features are exemplified by the following drawings, detailed description, examples, and claims.

BRIEF DESCRIPTION OF THE FIGURES

FIG. 1 is a graph of YI values of the compositions of Table 1, showing that YI decreases with increasing sulfur levels from 0-30 ppm with dilauryl thiodipropionate (DLTDP) as the sulfur source.

FIG. 2 is a graph of YI values for the compositions shown in Table 1, showing no significant change in YI with increasing molding temperature from 662°F (35 seconds, "average") to 689°F, 60 seconds, ("abusive") with DLTDP as the sulfur source.

DETAILED DESCRIPTION

The inventors hereof have discovered that the presence of an added stabilizing, sulfur-containing compound in thermoplastic copolycarbonate compositions can improve one or more properties of the compositions. This is a surprising result because it is known that sulfur impurities produced during monomer synthesis are associated with undesirable color formation in these compositions. The inventors have found, however, that compositions with added sulfur from sulfur-containing stabilizers have improved color stability. The thermoplastic compositions include a high

heat copolycarbonate comprising low heat aromatic carbonate units, high heat aromatic carbonate units; and a sulfur-containing stabilizer compound. The added sulfur content of the high heat copolycarbonate can be from 5-100 parts per million (ppm) by weight. In some aspects, the sulfur-containing stabilizer compound is soluble in an organic solvent but has low solubility in an aqueous solvent.

As stated above, the high heat copolycarbonates can comprise repeat carbonate units including low heat carbonate units (1) and high heat aromatic carbonate units (2)

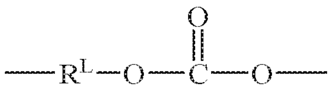 (1) 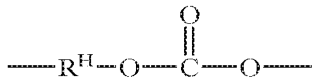 (2)

wherein $R^L$ is derived from the corresponding low heat aromatic dihydroxy monomer and $R^H$ is derived from the corresponding high heat aromatic dihydroxy monomer. Each of these is described in further detail below.

The low heat aromatic carbonate units (1) can be derived from the corresponding low heat aromatic dihydroxy monomer. As used herein, a "low heat aromatic dihydroxy monomer" means a compound that can be used to manufacture a polycarbonate homopolymer having a Tg of less than 170°C, for example 120-160°C, each as determined by differential scanning calorimetry (DSC) as per ASTM D3418 with a 20°C/min heating rate. Such monomers generally have 18 or fewer carbon atoms. Exemplary $R^L$ groups in low heat aromatic carbonate units (1) can be of formula (1a)

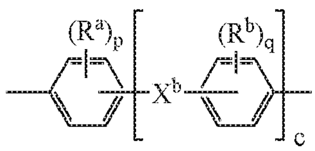 (1a)

wherein $R^a$ and $R^b$ are each independently a halogen, $C_{1-3}$ alkoxy, or $C_{1-3}$ alkyl, c is 0-4, and p and q are each independently integers of 0 or 1. In an embodiment, p and q are each 0, or p and q are each 1 and $R^a$ and $R^b$ are each a methyl, disposed meta to the hydroxy group on each arylene group. $X^b$ in formula (3a) is a bridging group connecting the two hydroxy-substituted aromatic groups, where the bridging group and the hydroxy substituent of each $C_6$ arylene group are disposed ortho, meta, or para (preferably para) to each other on the $C_6$ arylene group. $X^b$ can be, for example, a single bond, -O-, -C(O)-, or a $C_{1-6}$ organic group, which can be cyclic or acyclic, aromatic or non-aromatic, and can further comprise heteroatoms such as halogens, oxygen, nitrogen, sulfur, silicon, or phosphorous. For example, $X^b$ can be a $C_{3-6}$ cycloalkylidene, a $C_{1-6}$ alkylidene of the formula $-C(R^c)(R^d)-$ wherein $R^c$ and $R^d$ are each independently hydrogen, $C_{1-5}$ alkyl, or a group of the formula $-C(=R^e)-$ wherein $R^e$ is a divalent $C_{1-5}$ hydrocarbon group. Some illustrative examples of dihydroxy compounds that can be used are described, for example, in WO 2013/175448 A1, US 2014/0295363, and WO 2014/072923.

High heat polycarbonate compositions are disclosed in WO-A-2015/159246. Polycarbonate compositions having enhanced optical properties are disclosed in WO-A-2018/020425 and yellowing-resistant polycarbonate compositions are disclosed in WO-A-2014/036254.

In an aspect, the low heat aromatic group is of the formula

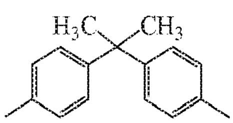

and can be derived from 2,2-is (4-hydroxyphenyl)propane), also known as bisphenol A (BPA).

The high heat aromatic carbonate units (2) can be derived from the corresponding high heat aromatic dihydroxy monomers. As used herein, "high heat aromatic dihydroxy monomer" means a compound that can be used to manufacture a polycarbonate homopolymer having a glass transition temperature (Tg) of 175-330°C determined by differential scanning calorimetry (DSC) as per ASTM D3418 with a 20°C/min heating rate. Such monomers generally have 19 or more carbon atoms. Exemplary $R^H$ groups in high heat aromatic carbonate units (2) can be of formulas (2a)-(2g)

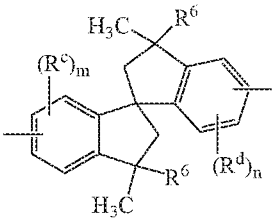 (2a) 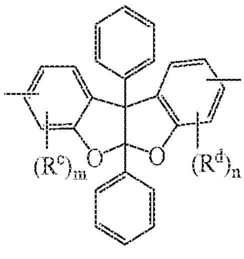 (2b) 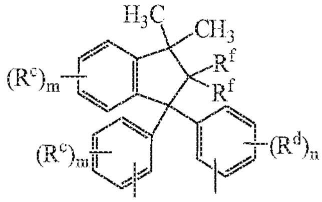 (2c)

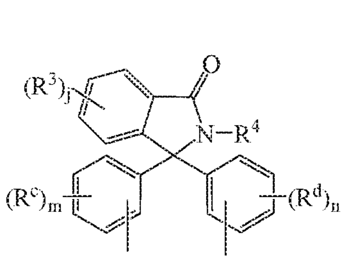 (2d) 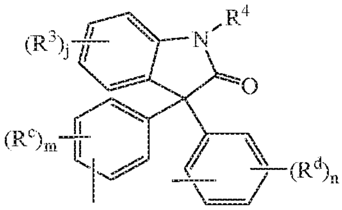 (2e) 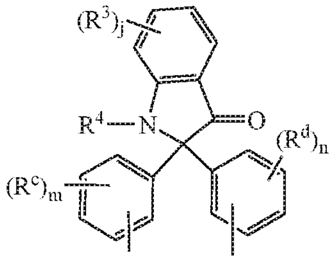 (2f)

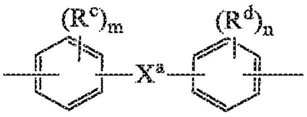 (2g)

wherein $R^c$ and $R^d$ are each independently a $C_{1-12}$ alkyl, $C_{2-12}$ alkenyl, $C_{3-8}$ cycloalkyl, or $C_{1-12}$ alkoxy, each $R^f$ is hydrogen or both $R^f$ together are a carbonyl group, each $R^3$ is independently $C_{1-6}$ alkyl, $R^4$ is hydrogen, $C_{1-6}$ alkyl, or phenyl optionally substituted with 1-5 $C_{1-6}$ alkyl groups, $R^6$ is independently $C_{1-3}$ alkyl or phenyl, preferably methyl, $X^a$ is a $C_{6-12}$ polycyclic aryl, $C_{3-18}$ mono- or polycycloalkylene, $C_{3-18}$ mono- or polycycloalkylidene, $-C(R^h)(R^g)-$ group wherein $R^h$ is hydrogen, $C_{1-12}$ alkyl, or $C_{6-12}$ aryl and $R^g$ is $C_{6-12}$ aryl, or $-(Q^a)_x-G-(Q^b)_y-$ group wherein $Q^a$ and $Q^b$ are each independently a $C_{1-3}$ alkylene, G is a $C_{3-10}$ cycloalkylene, x is 0 or 1, and y is 1, and j, m, and n are each independently 0-4. A combination of high heat aromatic groups can be used.

In an aspect, $R^c$ and $R^d$ are each independently a $C_{1-3}$ alky or $C_{1-3}$ alkoxy, each $R^6$ is methyl, each $R^3$ is independently $C_{1-3}$ alkyl, $R^4$ is methyl, or phenyl, each $R^6$ is independently $C_{1-3}$ alkyl, or phenyl, preferably methyl, $X^a$ is a $C_{6-12}$ polycyclic aryl, $C_{3-18}$ mono- or polycycloalkylene, $C_{3-18}$ mono- or polycycloalkylidene, $-C(R^h)(R^g)-$ group wherein $R^h$ is $C_{1-3}$ alkyl or $C_{6-12}$ aryl and $R^g$ is $C_{6-12}$ aryl, or $-(Q^1)_x-G-(Q^2)_y-$ group, wherein $Q^1$ and $Q^2$ are each independently a $C_{1-3}$ alkylene and G is a $C_{3-10}$ cycloalkylene, x is 0 or 1, and y is 1, and j, m, and n are each independently 0 or 1.

Specific exemplary high heat aromatic groups $R^H$ include those of the formulas:

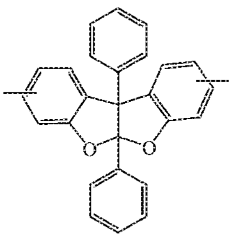
(2b-1)

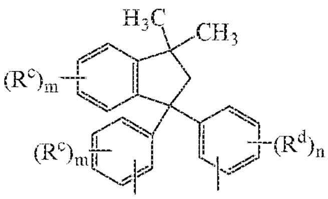
(2c-1)

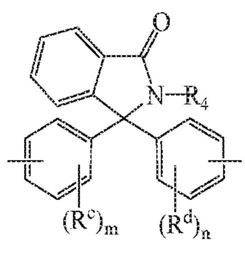
(2e-1)

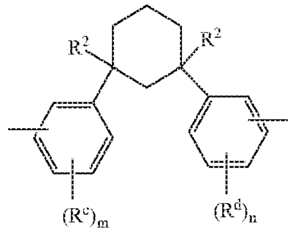
(2g-1)

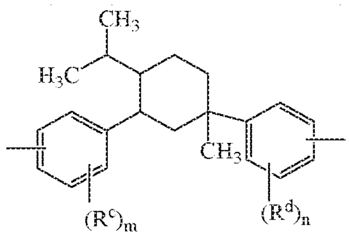

(2g-2)

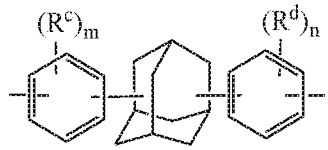

(2g-3)

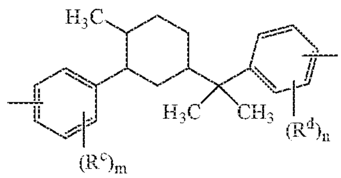

(2g-4)

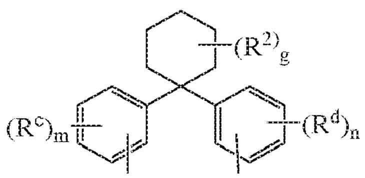

(2g-5)

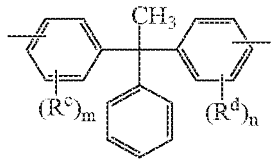

(2g-6)

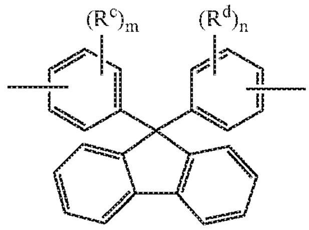

(2g-7)

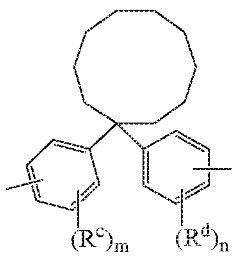

(2g-8)

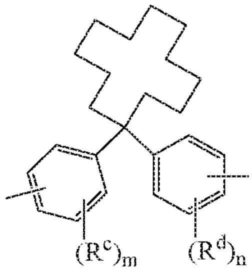

(2g-9)

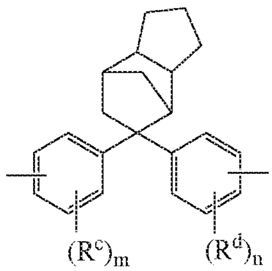

(2g-10)

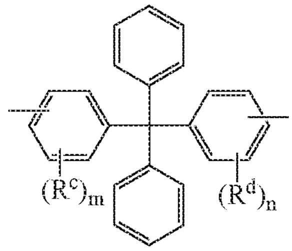

(2g-11)

wherein $R^c$ and $R^d$ are the same as defined for formulas (2a)-(2g), each $R^2$ is independently hydrogen or $C_{1-4}$ alkyl, m and n are each independently 0-4, each $R^3$ is independently $C_{1-4}$ alkyl or hydrogen, $R^4$ is $C_{1-6}$ alkyl or phenyl optionally substituted with 1-5 $C_{1-6}$ alkyl groups, and g is 0-10. In a specific aspect each bond of the divalent group is located para to the linking group that is $X^a$, and $R^c$ and $R^d$ are each independently a $C_{1-3}$ alkyl, or $C_{1-3}$ alkoxy, each $R^2$ is methyl, x is 0 or 1, y is 1, and m and n are each independently 0 or 1.

The high heat aromatic group is preferably of the formulas

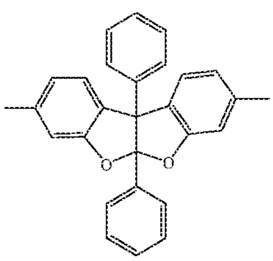

(2b-1a)

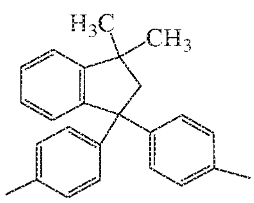

(2c-1a)

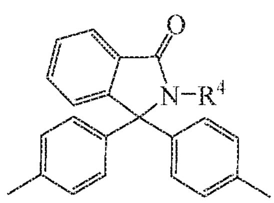

(2e-1a)

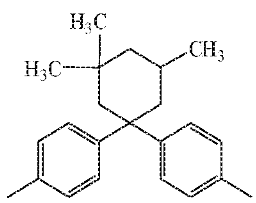

(2g-5a)

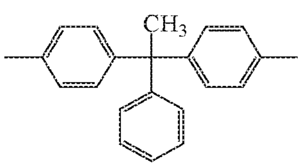

(2g-6a)

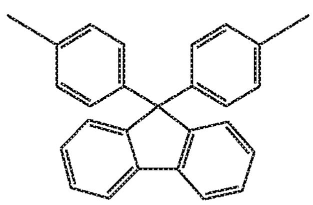

(2g-7a)

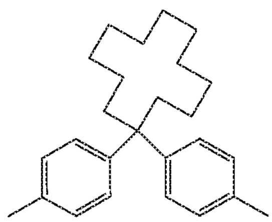

(2g-9a)

wherein $R^4$ is methyl or phenyl.

Preferably, the high heat aromatic group is derived from the corresponding bisphenol, in particular from 3,8-dihydroxy-5a,10b-diphenyl-coumarano-2',3',2,3-coumarane (corresponding to structure 2b-1a), 4,4'-(3,3-dimethyl-2,2-dihydro-1H-indene-1,1-diyl)diphenol (corresponding to structure 2c-1a), 2-phenyl-3,3'-bis(4-hydroxyphenyl) phthalimidine (PPPBP) (corresponding to structure 2e-1a), 1,1-bis(4-hydroxyphenyl)-3,3,5-trimethyl-cyclohexane (BPI) (corresponding to structure 2g-5a), 4,4'-(1-phenylethylidene)bisphenol (corresponding to structure 2g-6a), 9,9-bis(4-hydroxyphenyl)fluorene (corresponding to structure (2g-7a), 1,1-bis(4-hydroxyphenyl)cyclododecane (corresponding to structure 2g-9a), or a combination thereof. In an aspect, the high heat aromatic group is derived from BPI.

The high heat copolycarbonates can comprise: 5-98 mole percent (mol%) of the low heat carbonate units (1), preferably bisphenol A carbonate units and 2-95 mol% of the high heat aromatic carbonate units (2), and. Preferably, the high heat carbonate units are derived from BPI, PPPBP, or a combination thereof. If a combination of two high heat aromatic monomers is used, such as BPI and PPPBP, the high heat copolycarbonate can have 5-95 mol% of a first high heat aromatic carbonate units and 5-95 mol% of a second high heat aromatic carbonate units, or 20-80 mol% of the first high heat aromatic carbonate units and 20-80 mol% of the second high heat aromatic carbonate units, or 30-70 mol% of the first high heat aromatic carbonate units and 30-70 mol% of the second high heat aromatic carbonate units, each based on the total number of carbonate units in the high heat copolycarbonates.

In another aspect, the high heat copolycarbonates can comprise 10-80 mol% of the low heat carbonate units (1), preferably bisphenol A carbonate units, and 20-90 mol% of the high heat aromatic carbonate units (2). Preferably, the high heat carbonate units are derived from BPI, PPPBP, or a combination thereof. If a combination of two high heat aromatic monomers is used, such as BPI and PPPBP, the high heat copolycarbonate can have 5-95 mol% of the first high heat aromatic carbonate units and 5-95 mol% of the second high heat aromatic carbonate units, or 20-80 mol% of the first high heat aromatic carbonate units and 20-80 mol% of the second high heat aromatic carbonate units, or 30-70 mol% of the first high heat aromatic carbonate units and 30-70 mol% of the second high heat aromatic carbonate units, each based on the total number of carbonate units in the high heat copolycarbonates.

In another aspect, the high heat copolycarbonate can comprise: 20-70 mol% of low heat aromatic carbonate units (1), preferably bisphenol A carbonate units, and 30-80 mol% of the high heat aromatic carbonate units (2). Preferably, the high heat carbonate units are derived from BPI, PPPBP, or a combination thereof. If a combination of two high heat aromatic monomers is used, such as BPI and PPPBP, the high heat copolycarbonate can have 5-95 mol% of the first high heat aromatic carbonate units and 5-95 mol% of the second high heat aromatic carbonate units, or 20-80 mol% of the first high heat aromatic carbonate units and 20-80 mol% of the second high heat aromatic carbonate units, or 30-70 mol% of the first high heat aromatic carbonate units and 30-70 mol% of the second high heat aromatic carbonate units, each based on the total number of carbonate units in the high heat copolycarbonates.

The high heat copolycarbonate can be prepared from monomers wherein one or more of the monomers has a purity of at least 99.6%, at least 99.7%, or at least 99.8% as determined by high performance liquid chromatography. In an aspect, the high heat aromatic dihydroxy monomer has a purity of 99.8% of greater. In an aspect, the low heat aromatic dihydroxy monomer has a purity of 99.8% or greater. In a preferred aspect, both the high heat and low heat dihydroxy monomers have a purity of 99.8% or greater.

In contrast to the teachings of the prior art, the inventors have found that copolycarbonate compositions containing added sulfur can have improved properties such as transparency, provided that the source of the sulfur is present as an element of the monomer or the endcapping agents used to manufacture the copolycarbonates, or in various stabilizing compounds that contain sulfur as described herein. This sulfur is referred to herein as "added sulfur", and excludes any sulfur present as a contaminant in the components used in the manufacture of the copolycarbonates, i.e., the high heat aromatic dihydroxy monomer, the low heat aromatic dihydroxy monomer, endcapping agents, and the carbonate source, for example. Nonetheless, it can be advantageous to minimize or eliminate sulfur as a contaminant from these sources. Accordingly, in an aspect the high heat aromatic dihydroxy monomer and the low heat aromatic dihydroxy monomer each have a sulfur contaminant content of less than 5 ppm. In another aspect, the low heat aromatic dihydroxy monomer and the high heat aromatic dihydroxy monomer each have a purity of at least 99.6%, at least 99.7%, or at least 99.8% as determined by HPLC and a contaminant sulfur content of less than 5 ppm. In a preferred aspect, the low heat aromatic dihydroxy monomer and the high heat aromatic dihydroxy monomer each have a purity of at least 99.8% and a contaminant sulfur content of less than 5 ppm.

The high heat copolycarbonates can be manufactured by processes such as interfacial polymerization and melt polymerization, which are known, and are described for example in WO 2013/175448 A1 and WO 2014/072923 A1. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05-2.0 wt%. Combinations of linear polycarbonates and branched polycarbonates can be used.

An endcapping agent can be included during polymerization to provide end groups, for example monocyclic phenols such as phenol, p-cyanophenol, and $C_{1-22}$ alkyl-substituted phenols such as p-cumyl-phenol, resorcinol monobenzoate, and p-and tertiary-butyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used. When an endcapping agent is present, the high heat copolycarbonates can comprise a free hydroxyl level less than or equal to 250 ppm by weight, or less than or equal to 200 ppm, or less than or equal to 150 ppm. In some aspects the endcapping agent is a sulfur-containing endcapping agent as described in more detail below. A skilled person can adjust the amount of endcapping agent to achieve the desired target molecular weight.

The high heat copolycarbonates can be essentially free of certain ions or low molecular weight molecules (less than 150 Daltons (Da)) that can be present in the starting materials or that can arise from manufacture of the copolymers. For example, the high heat copolycarbonates can comprise less than 5 ppm, or less than 2 ppm of each chloride, sodium, calcium, iron, nickel, copper, and zinc ions as residual impurities. In another aspect, the high heat copolycarbonates have a very low residual impurity content, in particular less than 2 ppm of each of triethyl amine, calcium ions, magnesium ions, potassium ions, iron ions, and chloride ions. In another aspect, the high heat copolycarbonates have a low residual impurity content, in particular less than 5 ppm by weight, or less than 2 ppm by weight of each of lithium, sodium, potassium, calcium, magnesium, ammonium, chloride, bromide, fluoride, nitrite, nitrate, phosphite, phosphate, sulfate, acetate, citrate, oxalate, trimethylammonium, and triethylammonium. It is to be understood that the foregoing residual impurities can exist in the high heat copolycarbonates or polycarbonate compositions in un-ionized form (for example as triethylamine or formic acid) but are determined based on their ionized form.

The residual impurity content can be determined by methods known in the art, for example those described in US 2016/0237210 and US9287471 using ion chromatography. For example, determination can be accomplished via ion exchange, of a sample obtained by dissolving 2.4 gram of copolycarbonate in 20 mL of dichloromethane and extracting with 10 mL of distilled, deionized water for 1 hour. The water layer is analyzed by ion chromatography with respect to the desired anions, cations, and amines, in particular fluoride, acetate, formate, chloride, nitrite, bromide, nitrate, phosphite, sulphate, oxalate, phosphate, citrate, lithium, sodium, potassium, ammonium, magnesium, calcium, and diethylamine and triethylamine. In another aspect of quantitative analysis of ions, the sample can be submerged in de-ionized water kept at 55°C for 24 hours, the anions released into the water then analyzed via ion chromatography, e.g., with a Dionex DX500 Ion Chromatograph. Alternatively, quantitative analysis of metals and other compounds can be carried out by conventional inductively coupled plasma emission spectroscopy (ICP) methods to determine the presence of each constituent to the parts per billion (ppb) levels.

The high heat copolycarbonates can have a Tg of 200-260°C, or 210-260°C, or 220-260°C, each determined by DSC as per ASTM D3418 with a 20°C/min heating rate. In general, lower amounts of the low heat polycarbonate units provide copolycarbonates having higher Tgs.

The high heat copolycarbonates in some aspects can have a weight average molecular weight (Mw) of 10,000-50,000 Da, or 16,000-30,000 Da, as measured by gel permeation chromatography (GPC), using a crosslinked styrene-divinylbenzene column and calibrated to BPA homopolycarbonate references. GPC samples can be prepared at a concentration of 1 mg per ml and eluted at a flow rate of 1.5 ml per minute.

The thermoplastic composition including the high heat copolycarbonates further includes a sulfur-containing stabilizer compound, in an amount effective for the sulfur-containing stabilizer compound to provide 5-50 ppm, 5-40 ppm, or 5-10 ppm of added sulfur, i.e., sulfur-containing stabilizer-added sulfur, each based on the total parts by weight of the high heat copolycarbonate. As stated above, "added sulfur" (here, "sulfur-containing stabilizer-added sulfur") refers to sulfur added to the thermoplastic composition from the sulfur-containing stabilizer, and does not include any contaminant sulfur present in the high heat aromatic dihydroxy monomer, the low heat aromatic dihydroxy monomer, the endcapping agents, or the carbonate source used in manufacture of the high heat copolycarbonates.

The sulfur level of the high heat copolycarbonates can be measured by several methods. A commercially available Total Sulfur Analysis based on combustion and coulometric detection (fluorescence/chemiluminescence) can be used for samples that do not contain high levels of nitrogen. In the use of fluorescence/chemiluminescence detection of sulfur, interference of high concentrations of nitrogen concentrations becomes significant when analyzing sulfur at trace level. During combustion, the nitrogen present in the sample is converted into nitric oxide molecules (NO). During the absorption and excitation stage of the sulfur analyzer with UV-Fluorescence detection, NO-molecules interferes by emitting light at the same wavelength as SO2. Therefore, in samples with nitrogen content, it is advisable to use a different technique which is free of these interferences. In such cases, inductively coupled plasma mass spectrometry (ICP-MS) can be used. However, this technique can also be affected by interferences. For sulfur, the mass-to-charge ratios (m/z) of its main isotopes (32S+ and 34S+) overlap with polyatomic ions such as 16O2+, (16OH)2+, 16O18O+, and 14N18O+, which can affect sensitivity and accuracy of the measurement (L.L. Yu, W.R. Kelly, J.D. Fassett, and R.D. Vocke, J. Anal. At. Spectrum. 16, 140-145 (2001)). However, this can be overcome by introducing $O_2$ in a pressurized

reaction cell and monitoring SO+ rather than S+. Thus, the analytical signal is recorded in a m/z region with less intense interfering signals (R. Thomas, Spectroscopy 17, 42-48 (2002); D.R. Bandura, V.I. Baranov, and S.D. Tanner, Anal. Chem. 74, 1497-1502 (2002)). Lastly, a nitrogen-containing sample can be analyzed using a Triple Quadrupole ICP-MS (ICP-QQQ) which eliminates such interferences.

In some aspects, the sulfur-containing stabilizer compound comprises a saturated or unsaturated $C_{6-40}$ hydrocarbon chain, or a saturated or unsaturated, branched or unbranched $C_{10-30}$ hydrocarbon chain. Unsaturated hydrocarbon chains can include 1 or more degrees of unsaturation (alkene or alkyne), for example 1, 2, 3, or 4 degrees of unsaturation. The hydrocarbon chain preferably is unbranched. Preferably the $C_{6-40}$ hydrocarbon chain or $C_{10-30}$ hydrocarbon chain is a linear alkyl group.

The sulfur-containing stabilizer compound can include a thioether carboxy compound of formula (3)

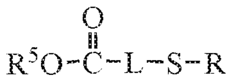
(3)

wherein L is a $C_{1-12}$ aliphatic or aromatic linking group; R is a $C_{1-40}$ alkyl, $C_{1-40}$ alkenyl, $C_{1-40}$ alkynyl, $C_{3-40}$ cycloalkyl, $C_{3-40}$ cycloalkenyl, $C_{6-40}$ aryl, $C_{7-40}$ arylalkylene, or $C_{7-40}$ alkylarylene; and $R^5$ is a hydrogen, $C_{1-40}$ alkyl, $C_{6-40}$ aryl, $C_{7-40}$ alkylarylene, or $C_{7-40}$ arylalkylene. In an aspect, L is a $C_{1-6}$ aliphatic or $C_6$ aromatic linking group; R is a $C_{1-30}$ alkyl, $C_{1-30}$ alkenyl, $C_{1-30}$ alkynyl, $C_{6-30}$ aryl, $C_{7-30}$ arylalkylene, or $C_{7-14}$ alkylarylene, and $R^a$ is hydrogen, $C_{1-30}$ alkyl, $C_{6-30}$ aryl, $C_{7-30}$ alkylarylene, or a $C_{7-30}$ arylalkylene. In a preferred aspect, L is a $C_{1-4}$ alkylene or $C_{6-12}$ arylene; R is $C_{1-30}$ alkyl; and $R^a$ is $C_{1-30}$ alkyl.

In some aspects, the sulfur-containing stabilizer compound is of formula 3(a)

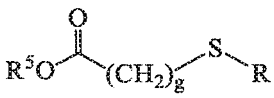
(3a)

wherein is a hydrogen, $C_{1-40}$ alkyl, $C_{1-40}$ alkenyl, $C_{1-40}$ alkynyl, $C_{3-40}$ cycloalkyl, $C_{3-40}$ cycloalkenyl, $C_{1-40}$ aryl, $C_{7-40}$ arylalkylene, or $C_{7-40}$ alkylarylene, and each g is independently the same or different and is 1-40, provided that $R^5$ has 6-40 or 10-30 carbon atoms or a is 6-40 or 10-30. In an aspect, each $R^5$ a $C_{6-40}$ alkyl, $C_{6-40}$ alkenyl, or $C_{6-40}$ alkynyl, and each g is independently the same or different and is 1-6. In a preferred aspect, $R^5$ is a linear $C_{6-40}$ or $C_{10-30}$ alkyl group and g is 1-6, or 1, 2, or 4.

In other aspects, the sulfur-containing stabilizer compound can be a thioether dicarboxy compound formula (4)

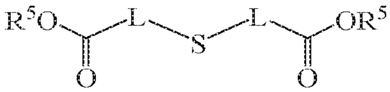
(4)

wherein each $R^5$ is independently the same or different and is a hydrogen, $C_{1-40}$ alkyl, $C_{1-40}$ alkenyl, $C_{1-40}$ alkynyl, $C_{3-40}$ cycloalkyl, $C_{3-40}$ cycloalkenyl, $C_{1-40}$ aryl, $C_{7-40}$ arylalkylene, or $C_{7-40}$ alkylarylene; and each L is independently the same or different and is a $C_{1-12}$ aliphatic or aromatic linking group. In an aspect, each $R^5$ is independently the same or different and is a $C_{1-30}$ alkyl, $C_{1-30}$ alkenyl, $C_{1-30}$ alkynyl, $C_{6-30}$ aryl, $C_{7-30}$ arylalkylene, or $C_{7-14}$ alkylarylene, and each L is independently the same or different and is a $C_{1-6}$ aliphatic or $C_6$ aromatic linking group.

In some aspects, at least one of the $R^5$ groups of formula (4) is a saturated or unsaturated, branched or unbranched $C_{6-40}$ hydrocarbon chain, or a saturated or unsaturated, branched or unbranched $C_{10-30}$ hydrocarbon chain as described above. The hydrocarbon chain preferably is unbranched. Preferably at least one, or both, of the $R^5$ groups of formula (4) is a linear $C_{6-40}$ or $C_{10-30}$ alkyl group. In this aspect the other of the $R^5$ groups can be $C_{1-12}$ alkyl, $C_{1-12}$ alkenyl, $C_{1-12}$ alkynyl, $C_{6-12}$ aryl, $C_{7-13}$ arylalkylene, or $C_{7-13}$ alkylarylene. Alternatively in this aspect, the other of the $R^5$ groups can be $C_{1-6}$ alkyl, $C_{1-6}$ alkenyl, $C_{6-12}$ aryl, $C_{7-13}$ arylalkylene, or $C_{7-13}$ alkylarylene.

In a preferred aspect the sulfur-containing stabilizer compound can be a thioether dicarboxy compound formula (4a)

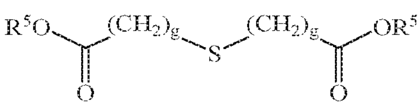
(4a)

wherein each $R^5$ is independently the same or different and is a hydrogen, $C_{1-40}$ alkyl, $C_{1-40}$ alkenyl, $C_{1-40}$ alkynyl, $C_{3-40}$ cycloalkyl, $C_{3-40}$ cycloalkenyl, $C_{1-40}$ aryl, $C_{7-40}$ arylalkylene, or $C_{7-40}$ alkylarylene, and each g is independently the same or different and is 1-40, provided that at least one has 6-40 or 10-30 carbon atoms or at least one g is 6-40 or 10-30. In an aspect, each is independently the same or different and is a $C_{6-40}$ alkyl, $C_{6-40}$ alkenyl, or $C_{6-40}$ alkynyl, and each g is independently the same or different and is 1-6. In a preferred aspect, each $R^5$ is the same, and is a linear $C_{6-40}$ or $C_{10-30}$ alkyl group and each g is the same and is 1-6, or 1, 2, or 4. Preferred sulfur-containing stabilizers of this type include dilauryl thiodipropionate, dicetyl thiodipropionate, dimyristyl thiodipropionate, distearyl thiodipropionate, and ditridecyl thiodipropionate, or a combination thereof.

In another aspect, the sulfur-containing stabilizer compound can be a thioether ester compound of formula (5)

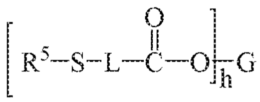

(5)

wherein each $R^5$ is independently the same or different and is a hydrogen, $C_{1-10}$ alkyl, $C_{1-40}$ alkenyl, $C_{1-40}$ alkynyl, $C_{3-40}$ cycloalkyl, $C_{3-40}$ cycloalkenyl, $C_{1-40}$ aryl, $C_{7-40}$ arylalkylene, or $C_{7-40}$ alkylarylene; and each L is independently the same or different and is a $C_{1-12}$ aliphatic or aromatic linking group. In an aspect, each $R^5$ is independently the same or different and is a $C_{1-30}$ alkyl, $C_{1-30}$ alkenyl, $C_{1-30}$ alkynyl, $C_{6-30}$ aryl, $C_{7-30}$ arylalkylene, or $C_{7-14}$ alkylarylene, and each L is independently the same or different and is a $C_{1-6}$ aliphatic or $C_6$ aromatic linking group.

In some aspects, at least one of the $R^5$ groups of formula (5) is a saturated or unsaturated, branched or unbranched $C_{6-40}$ hydrocarbon chain, or a saturated or unsaturated, branched or unbranched $C_{10-30}$ hydrocarbon chain as described above. The hydrocarbon chain preferably is unbranched. Preferably at least one, or all, of the $R^5$ groups of formula (5) is a linear $C_{6-40}$ or $C_{10-30}$ alkyl group. In this aspect the other of the groups can be $C_{1-12}$ alkyl, $C_{1-12}$ alkenyl, $C_{1-12}$ alkynyl, $C_{6-12}$ aryl, $C_{7-13}$ arylalkylene, or $C_{7-13}$ alkylarylene. Alternatively in this aspect, the other of the groups can be $C_{1-6}$ alkyl, $C_{1-6}$ alkenyl, $C_{6-12}$ aryl, $C_{7-13}$ arylalkylene, or $C_{7-13}$ alkylarylene.

In another aspect, the sulfur-containing stabilizer compound can be a thioether ester compound of formula (5a)

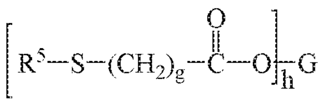

(5a)

wherein each $R^5$ is independently the same or different and is a $C_{1-40}$ alkyl, $C_{1-40}$ alkenyl, $C_{1-40}$ alkynyl, $C_{3-40}$ cycloalkyl, $C_{3-40}$ cycloalkenyl, $C_{1-40}$ aryl, $C_{7-40}$ arylalkylene, or $C_{7-40}$ alkylarylene, G is a $C_{2-20}$ hydrocarbyl having a valence h, g is 1-40, and h is 2-6, provided that at least one $R^5$ has 5-40 or 10-30 carbon atoms or at least one g is 5-40 or 10-30. In an aspect, each is a $C_{5-40}$ alkyl, $C_{5-40}$ alkenyl, or $C_{5-40}$ alkynyl, G is a $C_{2-8}$ alkyl having a valence h, g is 1-6, or 1, 2, or 4 and h is 2-6. In a preferred aspect, each $R^5$ is independently the same or different linear $C_{5-40}$ or $C_{10-30}$ alkyl group, G is a $C_{2-8}$ alkyl having a valence h, each g is the same and is 1-6, or 1-4, and h is 2-4. Preferred sulfur-containing stabilizers of this type include 2,2-bis[[3-(dodecylthio)-1-oxopropoxy]methyl]propane-1,3-diyl bis[3-(dodecylthio)propionate of formula (5b).

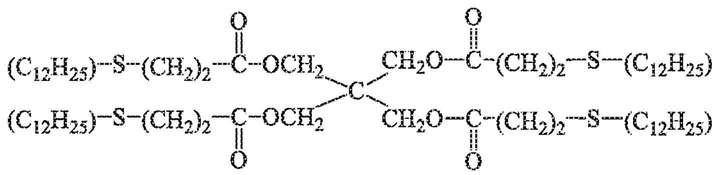

(5b)

In a preferred aspect, the sulfur-containing stabilizer compound is soluble in an organic solvent that also dissolves the high heat copolycarbonate, and has low solubility in an aqueous solvent at a pH of less than 11. These characteristics allow the sulfur-containing stabilizer compound to be added before, during, or after manufacture of the high heat copolycarbonate, and remain with the high heat copolycarbonate compositions in the organic phase during the separation of the brine phase or the extraction of the organic phase with an acidic aqueous phase or a neutral pH aqueous phase. In an aspect, the sulfur-containing stabilizer compound can have a solubility of 5 g in 20 mL of an organic phase solvent. The organic solvent is selected to dissolve the high heat copolycarbonate and can be a halogenated solvent such as methylene chloride, chlorobenzene, dichlorobenzene, or a combination thereof. Conversely, the sulfur-containing stabilizer can have a solubility of less than 0.5 mg in 10 mL of water or brine, each at a pH of less than 11,

or less than 7. In an aspect, the sulfur-containing stabilizer compound can have a solubility of less than 100 ppm, or more preferably less than 50 ppm in the water or a brine phase.

Accordingly, he sulfur-containing stabilizer compound can be added with the monomers (in the formulation tank), supplied in the monomer composition (provided by the supplier, for example), or pumped directly to the reactor before, during, or after the polymerization reaction. The sulfur-stabilizer compound can be added to a centrifuge feed tank, concentrator, or precipitation feed, or feed tank. The sulfur-containing stabilizer compound can be added as a solid, solution, or molten.

The sulfur-containing stabilizer compound in some aspects improves the color stability of the composition after the composition is molded under aggressive conditions, e.g., at high melt temperatures, such as 350°C or higher, or prolonged residence times during molding, such as times exceeding 7.5 or 10 minutes, or both. In some aspects it is possible to simultaneously improve the initial color of the polycarbonate composition and the color stability of the composition after the composition is molded under aggressive conditions, typically at high melt temperatures, such as 350°C or higher, or prolonged residence times during molding, such as times exceeding 7.5 or 10 minutes, or both.

In addition to the sulfur-containing stabilizer compound, in some aspects, a sulfur-containing endcapping agent can be present during manufacture of the high heat copolycarbonate, in particular those including $C_{6-14}$ alkyl substituents. In some aspects the sulfur-containing endcapping agent can provide improved mold release properties. The sulfur-containing endcapping agent can be a thioether carbonyl compound of formula (A)

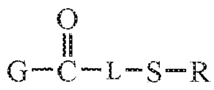 (A)

wherein G is leaving group, L is a $C_{1-12}$ aliphatic or aromatic linking group, and R is a $C_{1-20}$ alkyl, $C_{6-18}$ aryl, or $C_{7-24}$ alkylarylene, preferably a $C_{1-14}$ alkyl, $C_{6-12}$ aryl, or a $C_{7-13}$ arylalkylene. Preferably R is a $C_{6-14}$ alkyl. For example, G can be a halide, a hydroxy group (-OH), or a salt of a hydroxy group. For example, the salt can be an alkali metal or alkaline-earth metal salt, an ammonium salt, or the like. In another aspect, G of formula (A) can be of the formula $-OR^a$ and the thioether carbonyl compound can be of formula (A1)

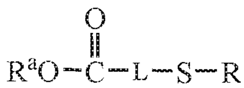 (A1)

wherein $R^a$ is a $C_{1-3}$ alkyl, $C_{6-18}$ aryl, $C_{7-24}$ alkylarylene, or $C_{7-24}$ arylalkylene, and L and R are defined in formula (A). Preferably $R^a$ is $C_{1-3}$ alkyl, and R is a $C_{6-14}$ alkyl.

The endcapping agent can be a thioether carbonyl compound of formula (A2), (A3), or a combination thereof

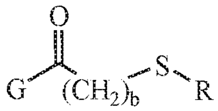 (A2) 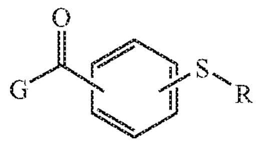 (A3)

wherein R is a $C_{1-20}$ alkyl, $C_{6-18}$ aryl, or $C_{7-24}$ arylalkylene, preferably a $C_{1-14}$ alkyl, $C_{6-12}$ aryl, or a $C_{7-13}$ arylalkylene, b is 1-5, preferably 1-2, and G is as defined in formula (A). In an aspect R is $C_{6-14}$ alkyl, b is 1-5, preferably 1-2, and G is hydrogen or $R^a$ as defined in formula A1, preferably $C_{1-3}$ alkyl.

For example, the endcapping agent can be a thioether carbonyl compound of formulas (B1) to (B5)

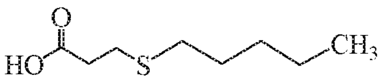 (B1) 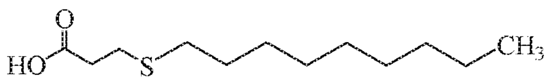 (B2)

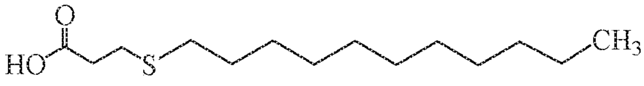 (B3)

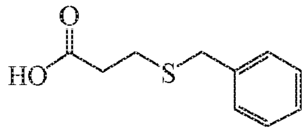 (B4) 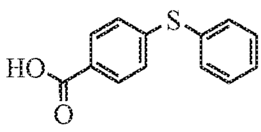 (B5)

or a combination thereof.

The sulfur-containing endcapping agent can be used alone or in combination with other endcapping agents. More than one sulfur-containing endcapping agent can be used, such as 2, 3, or 4 or more different sulfur-containing endcapping agents. When used, the high heat copolycarbonate further comprises thioether carbonyl endcaps of the formula -C(=O)-L-S-R, wherein L is a $C_{1-12}$ aliphatic or aromatic linking group and R is a $C_{1-20}$ alkyl, $C_{6-18}$ aryl, or $C_{7-24}$ arylalkylene. The endcaps can be of the formula

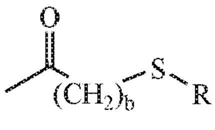, 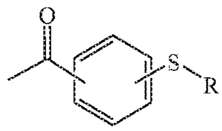,

or a combination thereof, wherein R is a $C_{1-20}$ alkyl, $C_{6-18}$ aryl, or $C_{7-24}$ arylalkylene, preferably a $C_{1-14}$ alkyl, $C_{6-12}$ aryl, or a $C_{7-13}$ arylalkylene, and b is 1-5, preferably 1-2.

In another preferred aspect, the thioether carbonyl endcaps are of the formula

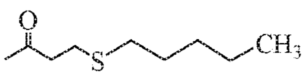, 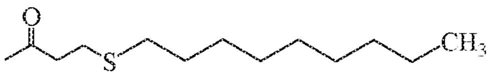,

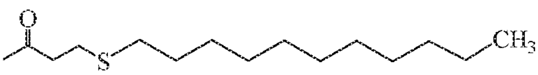, 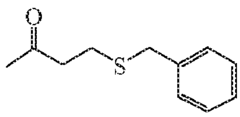, 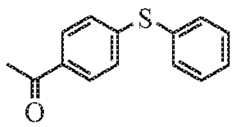,

or a combination thereof.

When the sulfur-containing endcaps are present, the amount of the sulfur-containing endcapping agent used can be that amount effective for the sulfur-containing endcaps to provide 5-70 ppm, preferably 5-50 ppm, more preferably 10-50 ppm of added sulfur, i.e., endcap-added sulfur, in the high heat copolycarbonates, each based on the total parts by weight of the high heat copolycarbonate. When sulfur-containing endcaps are present, a lower amount of the sulfur-containing stabilizer compound can be used to obtain the desired total added sulfur content. The total added sulfur content (the added sulfur from both the sulfur-containing stabilizer compound and the endcaps) can be 5-100 ppm, or 10-50 ppm, or 10-25 ppm, or 10-20 ppm.

In some aspects, the thermoplastic compositions can further include a sulfonic acid stabilizer also referred to herein as an "organosulfonic stabilizer". The organosulfonic stabilizer can be an aryl or aliphatic sulfonic acid, including a polymer thereof, an aryl or an aliphatic sulfonic acid anhydride, or an aryl or aliphatic ester of an aryl or aliphatic sulfonic acid, or a polymer thereof. In particular, the organosulfonic stabilizer is a $C_{1-30}$ alkyl sulfonic acid, a $C_{6-30}$ aryl sulfonic acid, a $C_{7-30}$ alkylarylene sulfonic acid, a $C_{7-30}$ arylalkylene sulfonic acid, or an aromatic sulfonic acid polymer; an anhydride of a $C_{1-30}$ alkyl sulfonic acid, a $C_{6-30}$ and sulfonic acid, a $C_{7-30}$ alkylarylene sulfonic acid, or a $C_{7-30}$ arylalkylene sulfonic acid; or a $C_{6-30}$ aryl ester of: a $C_{1-30}$ alkyl sulfonic acid, a $C_{6-30}$ aryl sulfonic acid, a $C_{7-30}$ alkylarylene sulfonic acid, a $C_{7-30}$ arylalkylene sulfonic acid, or an aromatic sulfonic acid polymer; or a $C_{1-30}$ aliphatic ester of: a $C_{1-30}$ alkyl sulfonic acid, a $C_{6-30}$ aryl sulfonic acid, a $C_{7-30}$ alkylarylene sulfonic acid, a $C_{7-30}$ arylalkylene sulfonic acid, or an aromatic sulfonic acid polymer. A combination of one or more of the foregoing can be used.

In an aspect, the organosulfonic stabilizer is of formula (6).

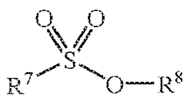 (6)

In formula (6), $R^7$ is each independently a $C_{1-30}$ alkyl, $C_{6-30}$ aryl, $C_{7-30}$ alkylarylene, $C_{7-30}$ arylalkylene, or a polymer unit derived from a $C_{2-32}$ ethylenically unsaturated aromatic sulfonic acid or its corresponding $C_{1-32}$ alkyl ester. The $C_{2-32}$ ethylenically unsaturated aromatic sulfonic acid can be of the formula

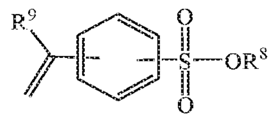

wherein $R^9$ is hydrogen or methyl and $R^8$ is as defined in formula (6). Preferably the ethylenically unsaturated group and the sulfonic acid or ester group are located para on the phenyl ring.

Further in formula (6), $R^8$ is hydrogen; or $R^8$ is $C_{1-30}$ alkyl; or $R^8$ is a group of the formula $-S(=O)_2-R^7$. When $R^8$ is a group of the formula $-S(=O)_2-R^7$, each $R^7$ in the compound of formula (6) can be the same or different, but preferably each $R^7$ is the same.

In an aspect in formula (6), $R^7$ is a $C_{6-12}$ aryl, $C_{7-24}$ alkylarylene, or a polymer unit derived from a $C_{2-14}$ ethylenically unsaturated aromatic sulfonic acid or its ester; and $R^8$ is hydrogen, $C_{1-24}$ alkyl, or a group of the formula $S(=O)_2-R^7$ wherein $R^7$ is a $C_{6-12}$ aryl or $C_{7-24}$ alkylarylene. In another aspect in formula (6), $R^7$ is a $C_{7-10}$ alkylarylene or a polymer unit derived from a $C_{2-14}$ ethylenically unsaturated aromatic sulfonic acid, and $R^8$ is a hydrogen, $C_{1-25}$ alkyl, or a group of the formula $-S(=O)_2-R^7$ wherein R is a $C_{7-10}$ alkylarylene. In still another aspect, $R^7$ is a $C_{7-10}$ alkylarylene and $R^8$ is a hydrogen or $C_{1-6}$ alkyl. In still another aspect, $R^7$ is a $C_{7-10}$ alkylarylene and $R^8$ is a hydrogen or $C_{12-25}$ alkyl, or $R^8$ is a $C_{14-20}$ alkyl. In another aspect, $R^7$ is a polymer unit derived from a $C_{2-14}$ ethylenically unsaturated aromatic sulfonic acid, preferably p-styrene sulfonic acid or para-methyl styrene sulfonic acid, such that in formula (6) $R^8$ is hydrogen.

The organosulfonic stabilizer can be a $C_{1-10}$ alkyl ester of a $C_{7-12}$ alkylarylene sulfonic acid, preferably of p-toluene sulfonic acid. More preferably the stabilizer is a $C_{1-6}$ alkyl ester of p-toluene sulfonic acid, such as butyl tosylate. In another aspect, the organosulfonic stabilizer is an anhydride of a $C_{7-12}$ alkylarylene sulfonic acid, preferably para-toluene sulfonic anhydride. In still another aspect, $R^7$ is a $C_{11-24}$ alkylarylene sulfonic acid, and $R^8$ is hydrogen. Alternatively, $R^7$ is a $C_{16-22}$ alkylarylene sulfonic acid, and $R^8$ is hydrogen.

In an aspect, the sulfonic acid stabilizer can be absent.

When present, the amount of the organosulfonic stabilizer used can be that amount effective to provide 2-40 ppm, or 2-20 ppm, or 4-15 ppm, or 4-10 ppm, or 4-8 ppm of added sulfur, i.e., organosulfonic stabilizer-added sulfur, to the copolycarbonates, each based on parts by weight of the copolycarbonate. When the organosulfonic stabilizer is present, a lower amount of the sulfur-containing endcaps (if present), or sulfur-containing stabilizer compound can be used to obtain the desired total added sulfur content. When the organosulfonic stabilizer is present, the total added sulfur content (the added sulfur from the sulfur-containing endcaps if present, the sulfur-containing stabilizer compound, and the organosulfonic stabilizer) can be 7-100 ppm, or 10-100 ppm, or 15-100 ppm, or 15-50 ppm, or 17-100 ppm, or 17-50 ppm, or 10-50 ppm, or 10-25 ppm, or 10-20 ppm, each based on the total parts by weight of the high heat copolycarbonates.

The total sulfur content of the thermoplastic composition (from all sources) can be 3-150 ppm, or 3-100 ppm, or 5-100 ppm, or 5-50 ppm, each by weight.

The thermoplastic compositions can comprise 10-100 wt%, or 20-80 wt%, or 40-70 wt%, or 85-99.8 wt% of the high heat copolycarbonate, each based on the total weight of the thermoplastic compositions. In some aspects, no additional polymer is present in the thermoplastic compositions. In other aspects, the thermoplastic compositions can comprise an additional polymer different from the high heat copolycarbonate, for example a polycarbonate such as a BPA homopolycarbonate. When an additional polycarbonate is present, it can be, for example in an amount less than 15 wt% of a BPA homopolycarbonate, based on the total weight of the thermoplastic composition.

If present, the BPA homopolycarbonate can be derived from a BPA monomer having a purity less than 99.7% determined by HPLC. Alternatively, the BPA homopolycarbonate can be derived from a high purity BPA monomer having a purity equal to or greater than 99.7% determined by HPLC. The BPA homopolycarbonate can be a linear BPA homopolycarbonate having an Mw of 10,000-100,000 Da, or 15,000-50,000 Da, or 17,000-35,000 Da, as measured by GPC, using a crosslinked styrene-divinylbenzene column and calibrated to BPA homopolycarbonate references. GPC samples can be prepared at a concentration of 1 mg per ml and eluted at a flow rate of 1.5 ml per minute. More than one BPA homopolycarbonate can be present. For example, the thermoplastic compositions can comprise a first BPA homopolycarbonate having an Mw of 20,000-25,000 Da and a second BPA homopolycarbonate having an Mw of 28,000-32,000 Da, or a second BPA homopolycarbonate having an Mw of 16,000-20,000 Da, each measured by GPC using BPA homopolycarbonate standards. The weight ratio of the first BPA homopolycarbonate relative to the second BPA homopolycarbonate can be 10:1-1:10, or 5:1-1: 5, or 3:1-1:3 or 2: 1-1:2.

In some aspects, it can be advantageous to use high heat copolycarbonates (and the optional BPA homopolycarbonates) with very low residual contents of volatile impurities. For example, the polymer components can have a content of chlorobenzene and other aromatic chlorine compounds of less than 10 ppm, or less than 5 ppm, or less than

2 ppm, dichloromethane of less than 1 ppm, or less than 0.5 ppm, monohydric phenols such as phenol, tert-butylphenol and cumylphenol of less than 15 ppm, or less than 5 ppm, or less than 2 ppm, and alkanes of less than 10 ppm, or less than 5 ppm. In other aspects, the high heat copolycarbonates and the optional BPA homopolycarbonates can have residual contents of: carbon tetrachloride of less than 0.01 ppm, diaryl carbonates, in particular diphenyl carbonate and di-tert-butyl phenol carbonate, of less than 5 ppm, or less than 2 ppm, BPA and other bisphenols of less than 5 ppm, or less than 2 ppm, or less than 0.5 ppm, sodium and other alkali metals and alkaline earth metals of less than 0.05 ppm, cresols of less than 1 ppm, or less than 0.2 ppm, phenolic OH groups of less than 300 ppm, or less than 200 ppm, or less than 100 ppm, alkaline earth metals of less than 0.1 ppm, or less than 0.05 ppm, pyridine of less than 1 ppm, or less than 0.1 ppm, nonhalogenated aromatic compounds such as xylene and toluene of less than 10 ppm, or less than 5 ppm. Methods for obtaining and measuring these amounts are described, for example, in US2012/0157653.

The thermoplastic composition can contain an epoxy additive. The inclusion of an epoxy compound can be used as a chain extender to improve molecular weight stability of the polycarbonate composition after hydroaging (for instance at 85°C and 85% relative humidity) or autoclaving at temperatures of 121°C, 134°C, 155°C, or other temperatures above 100°C. Epoxy compounds useful as additives include epoxy modified acrylic oligomers or polymers (such as a styrene-acrylate-epoxy polymer, prepared from for example a combination of: a substituted or unsubstituted styrene such as styrene or 4-methylstyrene; an acrylate or methacrylate ester of a C1-22 alkyl alcohol such as methyl acrylate, methyl methacrylate, ethyl acrylate, butyl acrylate, or the like; and an epoxy-functionalized acrylate such as glycidyl acrylate, glycidyl methacrylate, 2-(3,4-epoxycyclohexyl)ethyl acrylate, 2-(3,4-epoxycyclohexyl)ethyl methacrylate, or the like), or an epoxy carboxylate oligomer based on cycloaliphatic epoxides (such as, for example, 3,4-epoxycyclohexylmethyl-3,4-epoxycyclohexylcarboxylate, or the like). Specific commercially available exemplary epoxy functionalized stabilizers include Cycloaliphatic Epoxide Resin ERL-4221 supplied by Union Carbide Corporation (a subsidiary of Dow Chemical), Danbury, CT; and epoxy modified acrylates such as JONCRYL ADR-4300 and JONCRYL ADR-4368, available from BASF. Epoxy additives are typically used in amounts of up to 1 wt%, or 0.001-1 wt%, or 0.001-0.5 wt%, based on the total weight of the polycarbonate composition. In an aspect, the epoxy additive can be included in an amount of 0.001-0.3 wt%, or 0.01-0.3 wt%, or 0.1-0.3 wt%, based on the total weight of the polycarbonate composition. Use of greater amounts of epoxy compound can cause more splay, i.e., mold lines which fan outward from the point of injection into the mold, and observable to the unaided eye in molded optical articles comprising the polycarbonate composition.

The thermoplastic compositions can include various other additives ordinarily incorporated into polycarbonate compositions, with the proviso that the additive(s) are selected so as to not significantly adversely affect the desired properties of the polycarbonate composition, in particular melt flow, optical clarity, and thermal properties. Such additives can be mixed at a suitable time during the mixing of the components for forming the composition. Additives include antioxidants, heat stabilizers, light stabilizers, ultraviolet (UV) light stabilizers, plasticizers, lubricants, mold release agents, antistatic agents, colorants such as organic dyes, surface effect additives, radiation stabilizers, flame retardants, anti-drip agents, and impact modifiers. In an aspect, the polycarbonate composition further comprises a processing aid, an antioxidant or a heat stabilizer, an ultraviolet light absorber, a colorant, a flame retardant, an impact modifier, or a combination thereof. A combination of additives can be used, for example a combination of a heat stabilizer, mold release agent, and ultraviolet light stabilizer. In general, the additives are used in the amounts generally known to be effective. For example, the total amount of the additives (other than any impact modifier, filler, or reinforcing agents) can be 0-5 wt% or 0.01-5 wt%, based on the total weight of the thermoplastic composition, excluding any filler.

Antioxidant additives and heat stabilizers include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, organophosphites such as triphenyl phosphite, tris-(2, 6-dimethylphenyl)phosphite, tris-(mixed mono-and di-nonylphenyl)phosphite; phosphonates such as dimethylbenzene phosphonate, phosphates such as trimethyl phosphate. A combination can be used. Antioxidants and heat stabilizers can be used in amounts of 0.01-0.1 parts by weight, based on 100 parts by weight of the thermoplastic composition, excluding any filler.

Light stabilizers, including ultraviolet light (UV) absorbers, can also be used. Light stabilizers include benzotriazoles such as 2-(2-hydroxy-5-methylphenyl)benzotriazole and 2-(2-hydroxy-5-tert-octylphenyl)-benzotriazole, 2-hydroxy-4-n-octoxy benzophenone, or a combination thereof. UV absorbing additives include hydroxybenzophenones; hydroxybenzotriazoles; hydroxybenzotriazines; cyanoacrylates; oxanilides; benzoxazinones; 2-(2H-[-benzotriazol-2-yl)-4-(1,1,3,3-tetramethylbutyl)-phenol; 2-hydroxy-4-n-octyloxybenzophenone; 2-[4,6-bis(2,4-dimethylphenyl)-1,3,5-triazin-2-yl]- 5-(octyloxy)-phenol; 2,2'-(1,4-phenylene)bis(4H-3,1-benzoxazin-4-one); 1,3-bis[(2-cyano-3,3-diphenylacryloyl)oxy]-2,2-bis[[(2-cyano-3, 3-diphenylacryloyl)oxy]methyl]propane; 2,2'-(1,4-phenylene) bis(4H-3,1-betizoxazin-4-one); 1,3-bis[(2-cyano-3,3-diphenylacryloyl)oxy]-2,2-bis[[(2-cyano-3,3-diphenylacryloyl)oxy]methyl]propane; phenol, nano-size inorganic materials such as titanium oxide, cerium oxide, and zinc oxide, all with particle size less than or equal to 100 nanometers, a combination of different light stabilizers can be used. Light stabilizers are used in amounts of 0.01-5 parts by weight, based on 100 parts by weight of the thermoplastic composition, excluding any filler.

There is considerable overlap among plasticizers, lubricants, and mold release agents, which include, for example, phthalic acid esters (e.g, octyl-4,5-epoxy-hexahydrophthalate), tris-(octoxycarbonylethyl)isocyanurate, di- or polyfunctional aromatic phosphates (e.g, resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); fatty acid esters (e.g, alkyl stearyl esters such as methyl stearate and stearyl stearate, and esters of stearic acid such as pentaerythritol tetrastearate (PETS), glycerol tristearate (GTS), and the like), waxes (e.g, beeswax, montan wax, paraffin wax, or the like), or combination thereof. These are generally used in amounts of 0.01 to 5 parts by weight, based on 100 parts by weight of the thermoplastic composition, excluding any filler.

The thermoplastic compositions can optionally include flame retardants of various types and in known amounts, as described, for example, in US 2014/0295363 and US 2018/0066135. In an aspect, a brominated flame retardant such as a brominated polycarbonate can be used. In another aspect, the flame retardant can be a flame retardant salt, for example an alkali metal salt of a perfluorinated $C_{1-16}$ alkyl sulfonate, such as potassium perfluorobutane sulfonate (Rimar salt), potassium perfluoroctane sulfonate, tetraethylammonium perfluorohexane sulfonate, potassium diphenylsulfone sulfonate (KSS); a sodium benzene sulfonate such as sodium toluene sulfonate (NATS); an alkali metal or alkaline earth metal salt of carbonic acid, such as $Na_2CO_3$, $K_2CO_3$, MgCO3, $CaCO_3$, and $BaCO_3$; or a fluoro-anion complex such as $Li_3AlF_6$, $BaSiF_6$, $KBF_4$, $K_3AlF_6$, $KAlF_4$, $K_2SiF_6$, or $Na_3AlF_6$. Rimar salt, KSS, and NATS, alone or in combination with other flame retardants, are particularly useful. A cyclic siloxane or a linear siloxane can be used to impart flame retardant properties. Examples of cyclic siloxanes include octaphenylcyclotetrasiloxane, hexamethylcyclotrisiloxane, octamethylcyclotetrasiloxane, decamethylcyclopentasiloxane, dodecamethyl cyclohexasiloxane, trimethyltriphenylcyclotrisiloxane, and tetramethyltetraphenylcyclotetrasiloxane. Octaphenylcyclotetrasiloxane is preferred. The linear siloxanes can be a linear phenyl-containing siloxane such as a poly(phenylmethylsiloxane).

Organophosphorus flame retardants can be used. Organophosphorus flame retardants include aromatic organophosphorus compounds having at least one organic aromatic group and at least one phosphorus-containing group, as well as organic compounds having at least one phosphorus-nitrogen bond. Examples of organophosphorus compounds having at least one organic aromatic group include phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, triphenyl phosphate, tricresyl phosphate, isopropylated triphenyl phosphate, resorcinol tetraphenyl diphosphate (RDP), the bis(diphenyl) phosphate of hydroquinone, bisphenol A bis(diphenyl) phosphate (BPADP), and their oligomeric and polymeric counterparts, or a combination thereof. The organic compound containing a phosphorus-nitrogen bond can be a phosphazene, phosphonitrilic chloride, phosphorus ester amide, phosphoric acid amide, phosphonic acid amide, phosphinic acid amide, or tris(aziridinyl) phosphine oxide.

The thermoplastic compositions can be manufactured by various methods known in the art. For example, powdered copolycarbonate, and other optional components are first blended, optionally with any fillers, in a high-speed mixer or by hand mixing. The blend is then fed into the throat of a twin-screw extruder via a hopper. Alternatively, at least one of the components can be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

In an aspect, the BPA purity of the thermoplastic composition is equal to or greater than 99.6%, or equal or greater than 99.7%, or equal to or greater than 99.8% measured using HPLC. As used herein, the "BPA purity" refers to the overall purity of the BPA monomer used to prepare the high heat copolycarbonate and the BPA homopolycarbonate, if present. The BPA purity of a polycarbonate composition can be determined by a mild depolymerization followed by a HPLC analysis. For example, about 200 milligrams (mg) of the polycarbonate composition is dissolved in 5 milliliters (mL) of tetrahydrofuran (THF) and 2 ml of a 10% solution of potassium hydroxide diluted in methanol. The depolymerization of polycarbonate is carried out with the use of these solvents. The solution is shaken for 2 hours. Then, 2 mL of acetic acid are added to protonate the BPA carbonate salts and decrease the pH. The solution is shaken again for half an hour for homogenization and dissolution of all precipitates. The sample is analyzed by HPLC. The wt% of BPA impurities in the polycarbonate composition can be calculated by Equation 1.

$$\text{wt\% of impurities in BPA} = \frac{\text{wt\% of impurities } * 254}{228} \quad \text{(Equation 1)}$$

In Equation 1, wt% of impurities refers to the impurities measured by HPLC after depolymerization. Because the BPA molar mass is different from the carbonated BPA, the wt% of impurities is multiplied by 254 Da and divided by 228 Da. An amount of 254 Da and 228 Da correspond to the BPA carbonate the BPA molar mass, respectively.

In certain aspects, which are preferred, the thermoplastic compositions can have a low residual impurity content, in particular less than 2 ppm by weight of each of lithium, sodium, potassium, calcium, magnesium, ammonium, chloride, bromide, fluoride, nitrite, nitrate, phosphite, phosphate, sulfate, acetate, citrate, oxalate, trimethylammonium, and triethylammonium. It is to be understood that the foregoing residual impurities can exist in the polycarbonate compositions in un-ionized form (for example as triethylamine or formic acid) but are determined based on their ionized form.

The thermoplastic compositions can be molded under standard molding conditions in range of 300-350°C depending on the Tg of the composition. For example, the polycarbonate compositions can be molded at a temperature of 100-175°C above the Tg of the polycarbonate composition for a residence time of 2-20 minutes.

The thermoplastic compositions can have a Tg of 200°C or higher, or 200-260°C, determined by DSC in accordance with ASTM D3418 with a 20°C/min heating rate.

The thermoplastic compositions can have excellent transparency. In an aspect, the thermoplastic compositions can have a haze of less than 5%, or less than 3%, or less than 1.5%, or less than 1.0%, and a transmission greater than 82%, preferably greater than 84%, preferably greater than 85%, or greater than 86% each measured as per ASTM D1003-00 using the color space CIE1931 (Illuminant C and a 2° observer) on a molded plaque with a 3.2 mm thickness. In another aspect, the polycarbonate compositions can have a haze of less than 15%, or less than 10%, more preferably less than 5%, even more preferably less than 1.5%, or less than 1.0% and a total transmission greater than 84% or greater than 86%, each measured as per ASTM D1003-00 on a molded plaque with a 3.0 mm thickness.

The thermoplastic compositions can have excellent color. In an aspect, the polycarbonate compositions have a yellowness index (YI) of less than 30, preferably less than 20, preferably less than 10, or preferably less than 5 as measured as per ASTM D1925 on a plaque of 3.2 mm thickness molded at a temperature of 350°C for a residence time of 2 minutes.

The thermoplastic compositions can be used in articles including a molded article, a thermoformed article, an extruded film, an extruded sheet, one or more layers of a multi-layer article, a substrate for a coated article, or a substrate for a metallized article. Optionally, the article has no significant part distortion or discoloration when the article is subjected to a secondary operation such as over-molding, lead-free soldering, wave soldering, low temperature soldering, or coating, or a combination thereof. The articles can be partially or completely coated with, e.g., a hard coat, a UV protective coat, an anti-refractive coat, an anti-reflective coat, a scratch resistant coat, or a combination thereof, or metallized.

Exemplary articles include a lens, a light guide, a waveguide, a collimator, an optical fiber, a window, a door, a visor, a display screen, an electronic device, a scientific or medical device, an autoclavable article, a safety shield, a fire shield, wire or cable sheathing, a mold, a dish, a tray, a screen, an enclosure, glazing, packaging, a gas barrier, an anti-fog layer, or an anti-reflective layer.

The compositions can be used in component of a device comprising a lens, a device comprising a light guide, a device comprising a waveguide, a device comprising a collimator, a device comprising an optical fiber, a device comprising a lighting element, a device comprising a window, a device comprising a door, or the article is a structural component of a vehicle, a building, or an appliance, or the article is a component of a medical device, a component of a display screen, a component of an electronic device, a component of a safety device, a component of a screen, a component of conveyor, a component of a mold, a component of a dish, a component of an enclosure, a component of packaging, a component of a gas barrier, a component of an encapsulant, a component of a label, a component of a gas.

The thermoplastic compositions can be provided as pellets and are useful to form transparent optical devices such as windows, sight glasses, visors, films, and lenses via various methods. The methods to make the optical articles are not particularly limited. Exemplary methods include part production via multi-cavity tools; molding such as injection molding, gas assist injection molding, vacuum molding, over-molding, compression molding, rotary molding, heat/cool molding, overmolding, transfer molding, or cavity molding; thermoforming; extruding; calendaring; casting; and the like.

Advantageously, the optical articles can have no significant part distortion or discoloration when the articles are subjected to a secondary operation such as over-molding, or coating with high temperature curing, or a combination thereof. High temperature cure of a coating can be, for example, 100°C or higher, for example 100-250°C. In some aspects, "no significant part distortion" includes a volume distortion of less than 10 volume percent (vol%), or less than 5 vol%, or less than 1 vol%. Significant discoloration can be detected by the unaided eye at a distance of 18 inches. The polycarbonate compositions, which have good flow (MVR) for excellent mold filling properties while maintaining desirable mechanical properties can, in the manufacture of optical articles, provide a high degree of reproducibility for successive optical articles molded from the polycarbonate composition.

The lens can be a planar (flat) lens, a curved lens, a cylindrical lens, a toric lens, a sphero-cylindrical lens, a fresnel lens, a convex lens, a biconvex lens, a concave lens, a biconcave lens, a convex-concave lens, a plano-convex lens, a plano-concave lens, a lenticular lens, a gradient index lens, an axicon lens, a conical lens, an astigmatic lens, an aspheric lens, a corrective lens, a diverging lens, a converging lens, a compound lens, a photographic lens, a doublet lens, a triplet lens, an achromatic lens, or a multi-array lens. Thus, the lens can be a layer of a multi-layer lens. The lens can be hard coated.

The lens can have an overall diameter of 0.1 mm-500 cm, or 0.25 mm-cm, or 0.5 mm-2 cm, or 0.5-20 mm. The lenses can have surface textures such as a macrotexture, a microtexture, a nanotexture, or a combination thereof on a surface of the lenses. Textures can also be imparted to the lenses using methods known in the art including but not limited to calendaring or embossing techniques. In an aspect, the lenses can pass through a gap between a pair of rolls with at least one roll having an embossed pattern thereon, to transfer the embossed pattern to a surface of the lenses. Textures can be applied to control gloss or reflection.

The shape of the lenses is not particularly limited. The lenses can also have different types. For example, the lenses can be a flat or planar lens, a curved lens, a cylindrical lens, a toric or sphero-cylindrical lens, a fresnel lens, a convex lens, a biconvex lens, a concave lens, a biconcave lens, a convex-concave lens, a plano-convex lens, a plano-concave lens, a lenticular lens, a gradient index lens, an axicon lens, a conical lens, an astigmatic lens, an aspheric lens, a corrective lens, a diverging lens, a converging lens, a compound lens, a photographic lens, a doublet lens, a triplet lens, an achromatic lens, or a multi-array lens.

The optical articles such as lenses can further comprise an indicium or a coating disposed on at least a portion of one or both sides of the lens to impart additional properties such as scratch resistance, ultra violet light resistance, aesthetic appeal, hydrophilicity, hydrophobicity, and the like. In an aspect, the coating is a hard coat, a UV protective coat, an anti-refractive coat, an anti-reflective coat, a scratch resistant coat, a hydrophobic coat, a hydrophilic coat, or a combination thereof. Coatings can be applied through standard application techniques such as overmolding, rolling, spraying, dipping, brushing, flow coating, or a combination thereof.

Depending on the applications, at least a portion of a surface of the optical articles such as lens is metallized in some aspects. A metal layer can be disposed onto the surface of the optical articles with the aid of electrocoating deposition, physical vapor deposition, or chemical vapor deposition or a suitable combination of these methods. Sputtering processes can also be used. The metal layer resulting from the metallizing process (e.g., by vapor deposition) can be 0.001-50 micrometers ($\mu$m) thick. Chrome, nickel, aluminum, and the like can be listed as examples of vaporizing metals. Aluminum vapor deposition is used in an aspect as metal vapor deposition. The surface of the molded substrate can be treated with plasma, cleaned, or degreased before vapor deposition in order to increase adhesion.

The optical articles such as lenses can have low birefringence, which means that the optical articles can have low light distortion and a better-quality image.

Exemplary lenses include a camera lens, a sensor lens, an illumination lens, a safety glass lens, an ophthalmic corrective lens, or an imaging lens.

The foregoing types of lenses can be used in a wide variety of applications. For example, the camera lens can be a mobile phone camera lens, a table camera lens, a security camera lens, a mobile phone camera lens, a tablet camera lens, a laptop camera lens, a security camera lens, a camera sensor lens, a copier camera lens, or a vehicle camera lens (e.g., an automotive camera lens).

The sensor lens can be a motion detector lens, a proximity sensor lens, a gesture control lens, an infrared sensor lens, or a camera sensor lens.

The illumination lens can be an indoor lighting lens, an outdoor lighting lens, vehicle headlamp lens, a vehicle foglight lens, a vehicle rearlight lens, a vehicle running light lens, a vehicle foglight lens, a vehicle interior lens, a light emitting diode (LED) lens, or an organic light emitting diode (OLED) lens. The safety glass lens is a glasses lens, a goggles lens, a visor, a helmet lens, or other protective gear.

The ophthalmic corrective lens can be incorporated into monocles, corrective glasses (including bifocals, trifocals, progressive lens, and the like), contact lenses, and the like.

The imaging lens can be a scanner lens, a projector lens, a magnifying glass lens, a microscope lens, a telescope lens, a security lens, reading glasses lens, and the like.

Accordingly, the lenses can be incorporated into a wide variety of devices, including a camera (including reflex cameras), an electronic device (such as mobile phones, tablets, laptop computers, and desk computers), a vehicle (which as used herein means any transportation devices, for example bicycles, scooters, motorcycles, automobiles, buses, trains, boats, ships, and aircraft) a flashlight, a business machine (such as a copier or a scanner), a lighting device (including indoor lighting such as table lamps and ceiling lights, outdoor lighting such as floodlights and streetlights, vehicle headlights, rearlights, side lights, running lights, foglights, and interior lights), an imaging device (such as a microscope, a telescope, a projector, a security lens (e.g. in a door), or reading glasses), a safety article (such as goggles, glasses, and headgear such as helmets), a vision corrective article (glasses or contact lens), or a toy.

Optical devices can also be windows, and sight glasses such as microwave windows, visors, a safety goggle,

a face shield, a fire shield, a helmet, a respirator, a component of a display screen, including a liquid crystal display screen, or an organic light-emitting diode display screen, a component of a screen such as a mining ore screen, a structural component of a building, a vehicle, or an appliance such as a pump, a microwave, a dishwasher, or a stove, a component of packaging, a component of an anti-fog assembly, or a component of an anti-reflective assembly.

The invention is further illustrated by the following non-limiting examples.

EXAMPLES

The materials shown in Table 1 were used.

Table 1. Materials

| Component | Chemical Description | Source |
|---|---|---|
| PPPBP | N-phenyl phenolphthalein bisphenol having a minimum purity of 99.8% by HPLC | Porus |
| BPI | 1,1-bis-(4-hydroxyphenyl)-3,3,5-trimethylcyclohexane having a minimum purity of 99.5 min bv HPLC) | Various |
| BPA | 2,2-is (4-hydroxyphenyl)propane | |
| BPA-PC | Linear bisphenol A homopolycarbonate produced by interfacial polymerization, Mw = 28,000-30,900 Da, having a minimum purity of 99.8% by HPLC | Kumho |
| PPPBP/BPA 33/67 | High heat copolycarbonate composition manufactured from PPPBP (33 mol%), BPA (67 mol%), and DLTDP ((0, 12, or 36 ppm added sulfur)) as described below | SABIC |
| PPPBP/BPI/BPA 10/70/20 | High heat copolycarbonate composition manufactured from PPPBP (10 mol%), BPI (70 mol%), BPA (20 mol%), and DLTDP (0, 12, or 36 ppm added sulfur) as described below. | SABIC |
| PPPBP/BPI/BPA 15/65/20 | High heat copolycarbonate composition manufactured from PPPBP (15 mol%), BPI (65 mol%), BPA (20 mol%), and DLTDP (0, 12, or 36 ppm added sulfur) by the method described below. | SABIC |
| BPI/BPA 80/20 | High heat copolycarbonate composition manufactured from BPI (80 mol%), BPA (20 mol%), and DLTDP (0. 12, or 36 ppm added sulfur) as described below. | SABIC |
| DLTDP | Dilauryl 3,3'-Thiodipropionate | |
| BDODP | 2,2-Bis[[3-(dodecylthio)-1-oxopropoxy]methyl]propane-1,3-diyl bis[3-(dodecylthio) propionate] (SEENOX 412S) | |

In addition to the components shown in the Tables below, each composition in the Tables contained 0.1 wt% of a phosphite stabilizer and 0.04 wt% of pentaerythritol tetrastearate (PETS).

Glass transition temperature (Tg) was determined by differential scanning calorimetry (DSC) according to ASTM D3418 with a 20°C/min heating rate.

Melt volume rate (MVR) was determined according to ASTM D1238-04 under the conditions listed in the Tables.

Yellowness index (YI) were determined as per ASTM D1925 on color chis having a thickness of 3.175 mm (0.125 inch).

Haze can be measured as per ASTM D1003-00 using the color space CIE1931 (Illuminant C and a 2° observer) on a molded plaque with a 3.2 mm thickness.

Percent transmission (%T) can be measured as per ASTM D1003-00 on a molded plaque with a 3.0 mm thickness.

Examples 1-6 and A-F

As a model system to establish the stability and effectiveness of the sulfur-containing stabilizers, polycarbonate homopolymer powder (BPA-PC) was compounded with DLTDP as shown in Table 2. In particular, the components were combined and extruded on a twin-screw extruder and molded at the temperatures shown in Table 2, FIG. 1, and FIG. 2.

Table 2. BPA-PC Compounded With DLTDP

| Item Description | Unit | 1* | 2* | 3* | 4* | 5* | 6* |
|---|---|---|---|---|---|---|---|
| BPA-PC | wt% | 100 | 100 | 100 | 100 | 100 | 100 |
| DLTDP | wt% | | 0.008 | 0.01609 | 0.008 | 0.04827 | |
| Added sulfur | Ppm | 0 | 5 | 10 | 5 | 30 | 0 |
| MVR (300°C, 360 sec wait time) | $cm^3$/10 min | 26.1 | 25 | 25.9 | 26.9 | 27.4 | 25.4 |
| MVR (300°C, 1080 see dwell time) | $cm^3$/10 min | 28.3 | 27.8 | 27.5 | 27.8 | 27.9 | 27.7 |
| % Shift in MVR | - | -8.4 | -11.2 | -6.2 | -3.3 | -1.8 | -9.1 |
| Mw | Daltons | 29,814 | 29,677 | 29,729 | 29,911 | 30,287 | 30,309 |
| Mn | Daltons | 7,677 | 6,793 | 7,454 | 7.615 | 10.1 32 | 8,624 |
| Mw/Mn | - | 3.88 | 4.37 | 3.99 | 3.93 | 2.99 | 3.51 |
| * Comparative examples | | | | | | | |

Table 2 shows that there is no loss in melt stability with increasing sulfur level. FIG. 1 shows that as-molded YI decreases with increasing S level. In addition, as the sulfur level increases to 10 ppm and greater, the difference between the abusive and normal samples show very little difference. FIG. 2 confirms these findings in that the sample with 30 ppm sulfur exhibited no change in color with increasing temperature; whereas, the sample without the sulfur stabilizer increased significantly with increasing molding temperature. No sulfur smell was detected during extrusion or molding.

As a model system to establish the stability and effectiveness of the sulfur-containing stabilizers, polycarbonate homopolymer powder (BPA-PC) was manufacture in the presence of DLTDP or BDODP as shown in Table 2A.

A representative procedure for manufacture of BPA-PC in the presence of sulfur additives is as follows. A mixture of methylene chloride (23 L), deionized water (10 L), BPA, 4,500 grams), BDODP (0.546 g; 50 ppm of added sulfur), p-cumylphenol (135 g, 0.636 mol), triethylamine (30 mL) and sodium gluconate (10 g) was added to a 75 L reactor equipped with mechanical stirrer, recirculation line with pH probe, subsurface phosgene inlet, chilled glycol condenser, sodium hydroxide scrubber for the exit gas, and sodium hydroxide solution inlet. Phosgene was added at 80 g/min for a total addition of about 2,200 g. A 33 wt% aqueous solution of sodium hydroxide was added as needed during the phosgenation to maintain a pH of 9-10. Then, an additional 200 g of phosgene were added while the pH was maintained by addition of aqueous sodium hydroxide. The reactor was then purged with nitrogen and its contents transferred to a 100 L work-up tank. The reaction mixture was purified on a centrifuge train where the brine phase was separated and the organic phase (including product polymer and methylene chloride) was extracted with aqueous hydrochloric acid and then washed with deionized water to remove ionic chlorides. The polymer was steam-precipitated from the resulting methylene chloride solution, and the precipitated polymer was dried under hot nitrogen. The p-cumylphenol amount was selected to achieve a target weight average molecular weight of 28,000 to 30,000 Da. The sulfur stabilizer type and amount are adjusted to achieve the target amounts of sulfur.

The samples were compounded with the phosphite stabilizer and PETS, and molded as shown in Table 2A.

Table 2A: BPA PC Polymerized With Sulfur Stabilizers.

| | | | | | | | | |
|---|---|---|---|---|---|---|---|---|
| Polymerization Composition | Additives | Unit | A* | B* | C* | D* | E* | F* |
| | BDODP | ppm | 0 | 12 | 12 | 50 | | |
| | DLTDP | ppm | | 100 | | | 0 | 13 |
| Properties | | | | | | | | |
| Measured sulfur on Color chips | ppm | 2 | 7 | 7 | 29 | 2 | 9 | |
| Molding Conditions (600°C/35 sec) | YI | 3.3 | 3.7 | 2. 7 | 2.8 | 3.3 | 3.5 | |
| | %T | 90.1 | 90.4 | 90.4 | 90.6 | 90.1 | 90 | |
| | % Haze | 1.2 | 1.2 | 1.1 | 1.0 | 1.2 | 1.2 | |

(continued)

| | Additives | Unit | A* | B* | C* | D* | E* | F* |
|---|---|---|---|---|---|---|---|---|
| Polymerization Composition | BDODP | ppm | 0 | 12 | 12 | 50 | | |
| | DLTDP | ppm | | 100 | | | 0 | 13 |
| Molding Conditions (640°C/60 sec) | YI | 3.6 | 4.2 | 3.1 | 3.1 | 3.6 | 3.9 | |
| | %T | 89.9 | 90.2 | 90.3 | 90.5 | 89.9 | 89.9 | |
| | % Haze | 1.2 | 1.2 | 1.2 | 1.0 | 1.2 | 1.2 | |
| * Comparative examples | | | | | | | | |

As seen from the data in Table 2A, BPA-PC homopolymer that is free of active hydrogen atoms does not show significant improvement upon the addition of sulfur additives in the polymerization process.

Examples 7-20

High heat copolycarbonate are manufacture in the presence of DLTDP or BDODP as shown in Table 3.. In these examples, the stabilizer is added to the formulation tank.

Table 3

| | Units | 7 | 8 | 9 | 10* | 11 | 12 | 13* | 14 | 15 | 16 | 17 | 18* | 19 | 20 |
|---|---|---|---|---|---|---|---|---|---|---|---|---|---|---|---|
| Calc. S content | ppm | 0 | 12 | 36 | 0 | 12 | 36 | 0 | 12 | 36 | 12 | 36 | 0 | 12 | 36 |
| PPPBP/BPA 33/67 (DLTDP) | | 100 | 100 | 100 | | | | | | | | | | | |
| BPI/BPA 80/20 (DLTDP) | | | | | | | | | | | | | 100 | 100 | 100 |
| PPPBP/BPI/BPA 15/65/20 (DLTDP) | % | | | | | | | 100 | 100 | 100 | | | | | |
| PPPBP/BPI/BPA 10/70/20 (DLTDP) | % | | | | 100 | 100 | 100 | | | | | | | | |
| PPPBP/BPI/BPA 10/70/20 (BDODP) | % | | | | | | | | | | 100 | 100 | | | |

The following procedure yielded PPPBP/BPA (33/67) with DLTDP (0, 12, or 36 ppm sulfur) used in Examples 7-9 (Ex. 7-9).

To a mixture of methylene chloride (20 L), DI water (8 L), BPA (2425 g 10.62 mol), p-cumylphenol (152.0 g, 0.7160 mol), triethylamine (40 ml), tetrabutyl ammonium chloride (9.45 gm), DLTDP (0 g for 0 ppm, 1 g for 12 ppm, or 3 g for 36 ppm) and sodium gluconate (10 g) in a 75 L reactor equipped with mechanical stirring, recirculation line with pH probe, subsurface phosgene addition, chilled glycol condenser, caustic scrubber for exit gas, and caustic solution inlet was added at 640 g/min (a solution of PPPBP (2075 g, 5.276 mol) in 1407 g of 33 % NaOH and 4825 g of DI water) while phosgene (2100 g) was added at 80 g/min. Aqueous caustic (33 wt%) was added as needed to maintain pH of 8 to 9 in the reactor. After 2100 g of phosgene was added, the reactor was then purged with nitrogen. A sample was obtained for GPC analysis. The material was phosgenated again (for a total of 2300 g) and the Mw was determined. The process was repeated until the MW increase was less than about 200 Da. The polymer mixture was transferred to the 100 L work-up tank. It was purified on a centrifuge train where the brine phase was separated and the polymer solution in methylene chloride was extracted with aqueous HCl and then washed with deionized water until titratable chlorides were less than 5 ppm. The polymer solution was then steam precipitated and the resultant polymer dried under hot nitrogen until volatile levels were less than 0.4 wt%. The polymer has a Tg of 195°C and a Mw of 22,500 Da.

The following procedure yielded PPPBP-BPI-BPA (10/70/20) with DLTDP (0, 12, or 36 ppm sulfur) used in Examples 10-12 (Ex. 10-12).

To a mixture of methylene chloride (22 L), DI water (9 L), BPA (686.5 g 3.007 mol), BPI (3267 gm, 10.53 mol), p-cumylphenol (139.8 g, 0.659 mol), triethylamine (25 ml), DLTDP (0 g for 0 ppm, 1 g for 12 ppm, or 3 g for 36 ppm) and sodium gluconate (10 g) in a 75 L reactor equipped with mechanical stirring, recirculation line with pH probe, subsurface phosgene addition, chilled glycol condenser, caustic scrubber for exit gas, and caustic solution inlet was added at 220 g/min (a solution of PPPBP (591.5 g, 1.504 mol) in 383 g of 33 % NaOH and 997 g of DI water) while phosgene (2200 g) was added at 70 g/min. Aqueous caustic (33 wt%) was added as needed to maintain pH of 8 to 9 in the reactor. After 2200 g of phosgene was added, the reactor was then purged with nitrogen. A sample was obtained for GPC analysis. The material was rephosgenated again (for a total of 2400 g) and the Mw was determined. The process was repeated until the Mw increase was less than about 200 Da. The polymer mixture was transferred to the 100 L work-up tank. It was purified on a centrifuge train where the brine phase was separated and the polymer solution in methylene chloride was extracted with aqueous HCl and then washed with DI water until titratable chlorides were less than 5 ppm. The polymer solution was then steam precipitated and the resultant polymer dried under hot nitrogen until volatile levels were <0.4 wt%. The 10/70/20 copolycarbonate had a Tg of 215°C and a Mw of 22,500 Da.

The above procedure was used to prepare the 15/65/20 copolycarbonate by adjusting the amounts of the individual monomers. The 15/65/20 copolycarbonate had a Tg of 215°C and a Mw of 22,500 Da. The 20/65/15 copolycarbonate had a Tg of 225°C and a Mw of 22,500 Da.

The following procedure yielded BPI-BPA (80/20) with DLTDP (0, 12, or 36 ppm sulfur) as used in Examples 18-20 (Ex. 18-20).

To a mixture of methylene chloride (22 L), DI water (9 L), BPA (704.3 g 3.085 mol), BPI (3831 g, 12.340), p-cumylphenol (143.4 g, 0.676 mol), triethylamine (25 ml), DLTDP (0 g, for 0 ppm, 1 g for 12 ppm, or 3 g for 36 ppm) and sodium gluconate (10 g) in a 75 L reactor equipped with mechanical stirring, recirculation line with pH probe, subsurface phosgene addition, chilled glycol condenser, caustic scrubber for exit gas, and caustic solution inlet was added phosgene (2200 g) was added at 70 g/min. Aqueous caustic (33 wt%) was added as needed to maintain pH of 8 to 9 in the reactor. After 2200 g of phosgene was added, the reactor was then purged with nitrogen. A sample was obtained for GPC analysis. The material was rephosgenated again (for a total of 2400 g) and the Mw was determined. The process was repeated until the Mw increase was less than about 200 Da. The polymer mixture was transferred to the 100 L work-up tank. It was purified on a centrifuge train where the brine phase was separated and the polymer solution in methylene chloride was extracted with aqueous HCl and then washed with deionized water until titratable chlorides were less than 5 ppm. The polymer solution was then steam precipitated and the resultant polymer dried under hot nitrogen until volatile levels were less than 0.4 wt%.

Other compositions, with different ratios of monomers or compositions wherein the sulfur-stabilizer compound was BDODP instead of DLTDP, can be prepared similarly, by adjusting the ratio of the reactants. The processes described above is one example of standard interfacial process. Other processes, such as batch control facility (BCF) and programed addition of the endcapping agent can work similarly.

The singular forms "a", "an", and "the" include plural referents unless the context clearly dictates otherwise. "Or" means "and/or". The endpoints of all ranges directed to the same component or property are inclusive and independently combinable. Unless defined otherwise, technical and scientific terms used herein have the same meaning as is commonly understood by one of skill in the art to which this invention belongs. As used herein, a "combination" is inclusive of blends, mixtures, alloys, reaction products, and the like. A "combination thereof" is open and includes any combination comprising at least one of the listed components or properties optionally together with a like or equivalent component or property not listed.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the terms "hydrocarbyl" and "hydrocarbon" refer broadly to a substituent comprising carbon and hydrogen, optionally with 1-3 heteroatoms, for example, oxygen, nitrogen, halogen, silicon, sulfur, or a combination thereof; "alkyl" means a straight or branched chain, saturated monovalent hydrocarbon group; "alkylene" means a straight or branched chain, saturated, divalent hydrocarbon group; "alkylidene" means a straight or branched chain, saturated divalent hydrocarbon group, with both valences on a single common carbon atom; "alkenyl" means a straight or branched chain monovalent hydrocarbon group having at least two carbons joined by a carbon-carbon double bond; "aryl" means an aromatic monovalent group containing only carbon in the aromatic ring or rings; "arylene" means an aromatic divalent group containing only carbon in the aromatic ring or rings; "alkylarylene" means an aryl group that has been substituted with an alkyl group as defined above, with 4-methylphenyl being an exemplary alkylarylene group; "arylalkylene" means an alkyl group that has been substituted with an aryl group as defined above, with benzyl being an exemplary arylalkylene group.

Unless otherwise indicated, each of the foregoing groups can be unsubstituted or substituted, provided that the substitution does not significantly adversely affect synthesis, stability, or use of the compound. The term "substituted" as used herein means that at least one hydrogen on the designated atom or group is replaced with another group, provided that the designated atom's normal valence is not exceeded. When the substituent is oxo (i.e., =O), then two hydrogens on the atom are replaced. Combinations of substituents or variables are permissible provided that the substitutions do not significantly adversely affect synthesis or use of the compound. Groups that can be present on a substituted position include (-$NO_2$), cyano (-CN), halogen, thiocyano (-SCN), $C_{2-6}$ alkanoyl (e.g., acyl ($H_3CC(=O)-$)); carboxamido; $C_{1-6}$ or $C_{1-3}$ alkyl, cycloalkyl, alkenyl, and alkynyl; $C_{1-6}$ or $C_{1-3}$ alkoxy, $C_{6-10}$ aryloxy such as phenoxy; $C_{1-6}$ alkylthio; $C_{1-6}$ or $C_{1-3}$ alkyl sulfinyl; $C_{1-6}$ or $C_{1-3}$ alkylsulfonyl; $C_{6-12}$ aryl having at least one aromatic rings (e.g., phenyl, biphenyl, naphthyl, or the like, each ring either substituted or unsubstituted aromatic); $C_{7-19}$ arylalkylene having 1-3 separate or fused rings and 6-18 ring carbon atoms; or arylalkyleneoxy having 1-3 separate or fused rings and 6-18 ring carbon atoms. The stated number of carbon atoms includes any substituents.

## Claims

1. A thermoplastic composition comprising:

   a high heat copolycarbonate comprising

   2-95 mole percent of high heat carbonate units derived from a high heat aromatic dihydroxy monomer, wherein a polycarbonate homopolymer derived from the high heat aromatic dihydroxy monomer has a glass transition temperature of 175-330°C determined by differential scanning calorimetry as per ASTM D3418 with a 20°C/min heating rate, and
   5-98 mole percent of a low heat carbonate units derived from a low heat aromatic monomer, wherein a polycarbonate homopolymer derived from the low heat aromatic monomer has a glass transition temperature of less than 170°C determined by differential scanning calorimetry as per ASTM D3418 with a 20°C/min heating rate, each based on the sum of the moles of the carbonate units; and

   a source of added sulfur which is a sulfur-containing stabilizer compound, wherein the sulfur-containing stabilizer compound is a thioether carboxy compound, a thioether dicarboxy compound, a thioether ester compound, or a combination thereof, and wherein the sulfur-containing stabilizer compound is present in an amount effective to provide 5-50 parts per million by weight of added sulfur, based on the total parts by weight of the copolycarbonate, where the sulfur content in the copolycarbonates is determined by the methods given in the present description.

2. The thermoplastic composition of claim 1, comprising:

   20-90 mole percent, or 30-80 mole percent of the high heat carbonate units; and
   10-80 mole percent, or 20-70 mole percent of low heat carbonate units.

3. The thermoplastic composition of any one of the preceding claims, wherein the high heat aromatic carbonate units are derived from 1,1-bis(4-hydroxyphenyl)-3,3,5-trimethylcyclohexane, 4,4'-(1-phenylethylidene)bisphenol,

4,4'-(3,3-dimethyl-2,2-dihydro-1H-indene-1,1-diyl)diphenol, 1,1-bis(4-hydroxyphenyl)cyclododecane, 3,8-dihydroxy-5a,10b-diphenyl-coumarano-2',3',2,3-coumarane, or a combination thereof.

**4.** The thermoplastic composition of any one of the preceding claims, wherein the high heat carbonate units are derived from ,4'-(1-phenylethylidene)bisphenol, 4,4'-(3,3-dimethyl-2,2-dihydro-1H-indene-1,1-diyl)diphenol, or a combination thereof.

**5.** The thermoplastic composition of any one of the preceding claims, wherein the low heat carbonate units are derived from bisphenol A.

**6.** The thermoplastic composition of any one of the preceding claims,

wherein the high heat copolycarbonate further thioether carbonyl endcaps of the formula -C(=O)-L-S-R, wherein L is a $C_{1-12}$ aliphatic or aromatic linking group and R is a $C_{1-20}$ alkyl, $C_{6-18}$ aryl, or $C_{7-24}$ arylalkylene;
or wherein the endcaps are of the formula

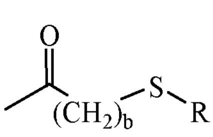 , 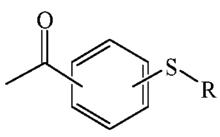 ,

or a combination thereof, wherein R is a $C_{1-20}$ alkyl, $C_{6-18}$ aryl, or $C_{7-24}$ arylalkylene, preferably a $C_{1-14}$ alkyl, $C_{6-12}$ aryl, or a $C_{7-13}$ arylalkylene, and b is 1-5, preferably 1-2;
or preferably wherein the thioether carbonyl endcaps are of the formula

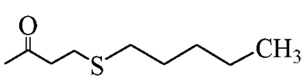 , 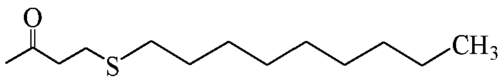 ,

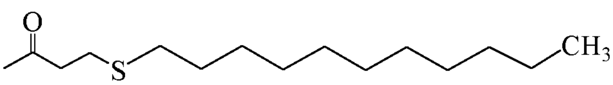 , 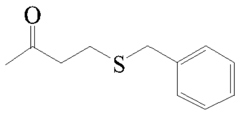 , 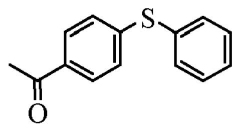 ,

or a combination thereof.

**7.** The thermoplastic composition of any one of the preceding claims, wherein the sulfur-containing stabilizer compound is soluble in an organic solvent for the copolycarbonate and is substantially insoluble in an aqueous solvent at a pH of less than 11.

**8.** The thermoplastic composition of any one of the preceding claims, wherein the sulfur-containing stabilizer compound comprises a $C_{6-40}$ hydrocarbon chain, preferably a $C_{10-30}$ hydrocarbon chain, more preferably a $C_{6-40}$ alkyl group or a $C_{10-30}$ alkyl group.

**9.** The thermoplastic composition of any one of the preceding claims, wherein the sulfur-containing stabilizer compound is dilauryl thiodipropionate, dicetyl thiodipropionate, dimyristyl thiodipropionate, distearyl thiodipropionate, ditridecyl thiodipropionate, 2-bis[[3-(dodecylthio)-1-oxopropoxy]methyl]propane-1,3-diyl bis[3-(dodecylthio)propionate, or a combination thereof.

**10.** The thermoplastic composition of any one of the preceding claims, further comprising asource of added sulfur which is an organosulfonic stabilizer present in an amount effective to provide 2-40 ppm, or 2-20 ppm, or 4-15 ppm, or 4-10 ppm, or 4-8 ppm by weight of added sulfur, based on the total parts by weight of the copolycarbonate.

**11.** The thermoplastic composition of any one of the preceding claims, having one or more of the following properties:

less than 5 parts per million by weight each of lithium, sodium, potassium, calcium, magnesium, ammonium,

chlorine, bromine, fluorine, nitrite, nitrate, phosphite, phosphate, sulfate, formate, acetate, citrate, oxalate, trimethylammonium, triethylammonium, or a combination thereof as measured by ion chromatography;
the high heat copolycarbonate is prepared from monomers wherein one or more of the monomers has a purity of at least 99.6%, at least 99.7%, or at least 99.8% as determined by high performance liquid chromatography; or
a yellowness index of less than or equal to 30, or less than 20, or less than 10, or less than or equal to 5 as measured by ASTM D1925 on a 3.2 mm plaque.

**12.** The thermoplastic composition of any one of the preceding claims, wherein the high heat aromatic hydroxyl monomer and the low heat aromatic hydroxyl monomer have a sulfur content of less than 5 parts per million by weight.

**13.** A method of making the copolycarbonate of any one of the preceding claims, the method comprising polymerizing a composition comprising:

2-95 mole percent of the high heat aromatic dihydroxy monomer,
5-98 mole percent of the low heat aromatic dihydroxy monomer, preferably bisphenol A, each based on the sum of the moles of the carbonate units; and
the source of added sulfur which is a sulfur-containing stabilizer compound, wherein the sulfur-containing stabilizer compound is present in an amount effective to provide 5-50 parts per million by weight of added sulfur, based on the total parts by weight of the copolycarbonate.

**14.** An article comprising the thermoplastic composition of any one of the preceding claims, wherein the article is optionally a camera lens, a sensor lens, an illumination lens, a safety glass lens, an ophthalmic corrective lens, or an imaging lens; optionally wherein a surface of the article is hard coated or metallized.

**Patentansprüche**

**1.** Thermoplastische Zusammensetzung, umfassend:

ein hochwärmebeständiges Copolycarbonat, umfassend
zu 2-95 Molprozent hochwärmebeständige Carbonateinheiten, die von einem hochwärmebeständigen aromatischen Dihydroxymonomer abgeleitet sind, wobei ein von dem hochwärmebeständigen aromatischen Dihydroxymonomer abgeleitetes Polycarbonathomopolymer eine Glasübergangstemperatur von 175-330 °C aufweist, die durch Differential-Raster-Kalorimetrie gemäß ASTM D3418 mit einer Heizrate von 20 °C/min bestimmt wird, und
zu 5-98 Molprozent an niederwärmebeständigen Carbonateinheiten, die von einem niederwärmebeständigen aromatischen Monomer abgeleitet sind, wobei ein Polycarbonathomopolymer, das von dem niederwärmebeständigen aromatischen Monomer abgeleitet ist, eine Glasübergangstemperatur von weniger als 170 °C aufweist, die durch Differential-Raster-Kalorimetrie gemäß ASTM D3418 mit einer Heizrate von 20 °C/min bestimmt wird, jeweils basierend auf der Summe der Mole der Carbonateinheiten; und
eine Quelle für zugesetzten Schwefel, die eine schwefelhaltige Stabilisatorverbindung ist, wobei die schwefelhaltige Stabilisatorverbindung eine Thioethercarboxyverbindung, eine Thioetherdicarboxyverbindung, eine Thioetheresterverbindung oder eine Kombination davon ist, und wobei die schwefelhaltige Stabilisatorverbindung in einer Menge vorhanden ist, die wirksam ist, um zu 5-50 Gewichtsteile pro Million zugesetzten Schwefel bereitzustellen, basierend auf den Gesamtgewichtsteilen des Copolycarbonats, wobei der Schwefelgehalt in den Copolycarbonaten durch die in der vorliegenden Beschreibung angegebenen Verfahren bestimmt wird.

**2.** Thermoplastische Zusammensetzung nach Anspruch 1, umfassend:

zu 20-90 Molprozent oder zu 30-80 Molprozent die hochwärmebeständigen Carbonateinheiten; und
zu 10-80 Molprozent oder 20-70 Molprozent niederwärmebeständige Carbonateinheiten.

**3.** Thermoplastische Zusammensetzung nach einem der vorstehenden Ansprüche, wobei die hochwärmebeständigen aromatischen Carbonateinheiten von 1,1-Bis(4-hydroxyphenyl)-3,3,5-trimethylcyclohexan, 4,4'-(1-Phenylethyliden)bisphenol, 4,4'-(3,3-Dimethyl-2,2-dihydro-1H-inden-1,1-diyl)diphenol, 1,1-Bis(4-hydroxyphenyl)cyclododecan, 3,8-Dihydroxy-5a,10b-diphenylcumarano-2',3',2,3-cumaran oder einer Kombination davon abgeleitet sind.

**4.** Thermoplastische Zusammensetzung nach einem der vorstehenden Ansprüche, wobei die hochwärmebeständigen

Carbonateinheiten vo , 4'-(1-Phenylethyliden)bisphenol, 4,4'-(3,3-Dimethyl-2,2-dihydro-1H-inden-1,1-diyl)diphenol oder einer Kombination davon abgeleitet sind.

**5.** Thermoplastische Zusammensetzung nach einem der vorstehenden Ansprüche, wobei die niederwärmebeständigen Carbonateinheiten von Bisphenol A abgeleitet sind.

**6.** Thermoplastische Zusammensetzung nach einem der vorstehenden Ansprüche,

wobei das hochwärmebeständige Copolycarbonat weitere Thioethercarbonylendkappen der Formel -C(=O)-L-S-R, wobei L eine $C_{1-12}$ aliphatische oder aromatische Verbindungsgruppe ist, und R ein $C_{1-20}$-Alkyl, $C_{6-18}$-Aryl oder $C_{7-24}$-Arylalkylen ist;
oder wobei die Endkappen die Formel

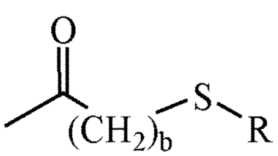 , 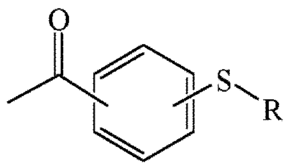 ,

oder eine Kombination davon aufweisen, wobei R ein $C_{1-20}$-Alkyl, $C_{6-18}$-Aryl oder $C_{7-24}$-Arylalkylen, vorzugsweise ein $C_{1-14}$-Alkyl, $C_{6-12}$-Aryl oder ein $C_{7-13}$-Arylalkylen ist, und b 1-5, vorzugsweise 1-2 ist;
oder vorzugsweise wobei die Thioethercarbonylendkappen die Formel

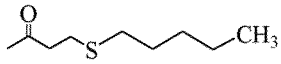 , 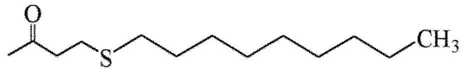 ,

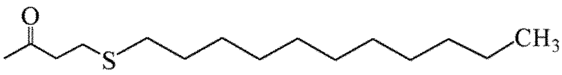 , 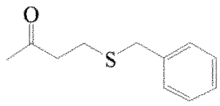 , 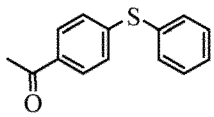 ,

oder eine Kombination davon aufweisen.

**7.** Thermoplastische Zusammensetzung nach einem der vorstehenden Ansprüche, wobei die schwefelhaltige Stabilisatorverbindung in einem organischen Lösungsmittel für das Copolycarbonat löslich ist und in einem wässrigen Lösungsmittel bei einem pH-Wert von weniger als 11 im Wesentlichen unlöslich ist.

**8.** Thermoplastische Zusammensetzung nach einem der vorstehenden Ansprüche, wobei die schwefelhaltige Stabilisatorverbindung eine $C_{6-40}$-Kohlenwasserstoffkette, vorzugsweise eine $C_{10-30}$-Kohlenwasserstoffkette, mehr bevorzugt eine $C_{6-40}$-Alkylgruppe oder eine $C_{10-30}$-Alkylgruppe umfasst.

**9.** Thermoplastische Zusammensetzung nach einem der vorstehenden Ansprüche, wobei die schwefelhaltige Stabilisatorverbindung Dilaurylthiodipropionat, Dicetylthiodipropionat, Dimyristylthiodipropionat, Distearylthiodipropionat, Ditridecylthiodipropionat, 2-Bis[[3-(dodecylthio)-1-oxopropoxy]methyl]propan-1,3-diyl-bis[3-(dodecylthio)propionat oder eine Kombination davon ist.

**10.** Thermoplastische Zusammensetzung nach einem der vorstehenden Ansprüche, ferner umfassend eine Quelle für zugesetzten Schwefel, die ein organosulfonischer Stabilisator ist, der in einer Menge vorhanden ist, die wirksam ist, um zu 2-40 ppm oder 2-20 ppm oder 4-15 ppm, oder 4-10 ppm oder 4-8 ppm zugesetzten Schwefel, bezogen auf die Gesamtgewichtsteile des Copolycarbonats, bereitzustellen.

**11.** Thermoplastische Zusammensetzung nach einem der vorstehenden Ansprüche, die eine oder mehrere der folgenden Eigenschaften aufweist:

zu weniger als 5 Gewichtsteile pro Million Lithium, Natrium, Kalium, Calcium, Magnesium, Ammonium, Chlor,

Brom, Fluor, Nitrit, Nitrat, Phosphit, Phosphat, Sulfat, Formiat, Acetat, Citrat, Oxalat, Trimethylammonium, Triethylammonium oder eine Kombination davon, gemessen durch Ionenchromatographie;
wobei das hochwärmebeständig Copolycarbonat aus Monomeren hergestellt wird, wobei ein oder mehrere der Monomere eine Reinheit von mindestens 99,6 %, mindestens 99,7 % oder mindestens 99,8 % aufweisen, bestimmt durch Hochleistungsflüssigchromatographie; oder
einen Vergilbungsindex von kleiner oder gleich 30, oder kleiner als 20, oder kleiner als 10, oder kleiner oder gleich 5, gemessen nach ASTM D1925 auf einer 3,2 mm dicken Platte.

**12.** Thermoplastische Zusammensetzung nach einem der vorstehenden Ansprüche, wobei das hochwärmebeständige aromatische Hydroxylmonomer und das niedrigwärmebeständige aromatische Hydroxylmonomer einen Schwefelgehalt von weniger als 5 Gewichtsteile pro Million aufweisen.

**13.** Verfahren zum Herstellen des Copolycarbonats nach einem der vorstehenden Ansprüche, das Verfahren umfassend das Polymerisieren einer Zusammensetzung umfassend:

zu 2-95 Molprozent das hochwärmebeständige aromatische Dihydroxymonomer,
zu 5-98 Molprozent das niederwärmebeständige aromatische Dihydroxymonomer, vorzugsweise Bisphenol A, jeweils bezogen auf die Summe der Mole der Carbonateinheiten; und
wobei die Quelle des zugesetzten Schwefels eine schwefelhaltige Stabilisatorverbindung ist, wobei die schwefelhaltige Stabilisatorverbindung in einer Menge vorhanden ist, die wirksam ist, um zu 5-50 Gewichtsteile pro Million zugesetzten Schwefel bereitzustellen, bezogen auf die Gesamtgewichtsteile des Copolycarbonats.

**14.** Artikel, umfassend die thermoplastische Zusammensetzung nach einem der vorstehenden Ansprüche, wobei der Artikel optional eine Kameralinse, eine Sensorlinse, eine Beleuchtungslinse, eine Sicherheitsglaslinse, eine ophthalmische Korrekturlinse oder eine Abbildungslinse ist; optional wobei eine Oberfläche des Artikels hartbeschichtet oder metallisiert ist.

## Revendications

**1.** Composition thermoplastique comprenant :

un copolycarbonate fortement résistant à la chaleur comprenant
2 à 95 % en moles de motifs carbonates fortement résistants à la chaleur dérivés d'un monomère dihydroxy aromatique fortement résistant à la chaleur, dans lesquels un homopolymère de polycarbonate dérivé du monomère dihydroxy aromatique fortement résistant à la chaleur a une température de transition vitreuse de 175 à 330 °C déterminée par calorimétrie à balayage différentiel conformément à la norme ASTM D3418 avec une vitesse de montée en température de 20 °C/min, et
5 à 98 % en moles de motifs carbonates faiblement résistants à la chaleur dérivés d'un monomère aromatique faiblement résistant à la chaleur, dans lesquels un homopolymère de polycarbonate dérivé du monomère aromatique faiblement résistant à la chaleur a une température de transition vitreuse inférieure à 170 °C déterminée par calorimétrie à balayage différentiel conformément à la norme ASTM D3418 avec une vitesse de montée en température de 20 °C/min,
dans chaque cas sur la base de la somme des moles des motifs carbonates ; et
une source de soufre ajouté qui est un composé stabilisant contenant du soufre, dans laquelle le composé stabilisant contenant du soufre est un composé thioéther carboxy, un composé thioéther dicarboxy, un composé thioéther ester, ou une de leurs combinaisons, et dans laquelle le composé stabilisant contenant du soufre est présent en une quantité efficace pour fournir 5 à 50 parties par million en poids de soufre ajouté, sur la base des parties totales en poids du copolycarbonate, où la teneur en soufre dans les copolycarbonates est déterminée par les méthodes indiquées dans la présente description.

**2.** Composition thermoplastique selon la revendication 1, comprenant :

20 à 90 % en moles ou 30 à 80 % en moles des motifs carbonates fortement résistants à la chaleur ; et
10 à 80 % en moles ou 20 à 70 % en moles de motifs carbonates faiblement résistants à la chaleur.

**3.** Composition thermoplastique selon l'une quelconque des revendications précédentes, dans laquelle les motifs carbonates fortement résistants à la chaleur dérivent de 1,1-bis(4-hydroxyphényl)-3,3,5-triméthylcyclohexane,

4,4'-(1-phényléthylidène)bisphénol, 4,4'-(3,3-diméthyl-2,2-dihydro-1H-indène-1,1-diyl)diphénol, 1,1-bis(4-hydroxyphényl)cyclododécane, 3,8-dihydroxy-5a,10b-diphénylcoumarano-2',3',2,3-coumarane, ou une de leurs combinaisons.

**4.** Composition thermoplastique selon l'une quelconque des revendications précédentes, dans laquelle les motifs carbonates fortement résistants à la chaleur dérivent de 4'-(1-phényléthylidène)bisphénol, 4,4'-(3,3-diméthyl-2,2-dihydro-1H-indène-1,1-diyl)diphénol, ou une de leurs combinaisons.

**5.** Composition thermoplastique selon l'une quelconque des revendications précédentes, dans laquelle les motifs carbonates faiblement résistants à la chaleur dérivent de bisphénol A.

**6.** Composition thermoplastique selon l'une quelconque des revendications précédentes, dans laquelle le copolycarbonate fortement résistant à la chaleur comprend en outre des coiffes terminales de thioéther carbonyle de formule -C(=O)-L-S-R dans laquelle L est un groupe de liaison aliphatique ou aromatique en $C_1$ à $C_{12}$ et R est un alkyle en $C_1$ à $C_{20}$, un aryle en $C_6$ à $C_{18}$, ou un arylalkylène en $C_7$ à $C_{24}$ ;

ou dans laquelle les coiffes terminales sont de formule

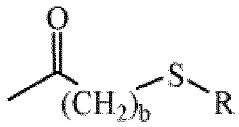,
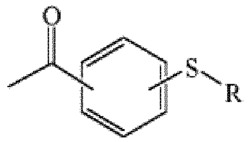,

ou une de leurs combinaisons, dans laquelle R est un alkyle en $C_1$ à $C_{20}$, un aryle en $C_6$ à $C_{18}$, ou un arylalkylène en $C_7$ à $C_{24}$, de préférence un alkyle en $C_1$ à $C_{14}$, un aryle en $C_6$ à $C_{12}$, ou un arylalkylène en $C_7$ à $C_{13}$, et b vaut de 1 à 5, de préférence de 1 à 2 ;
ou de préférence dans laquelle les coiffes terminales de thioéther carbonyle sont de formule

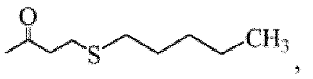, 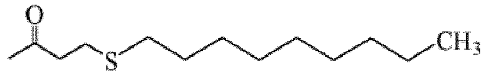,

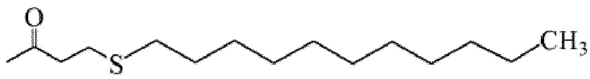, 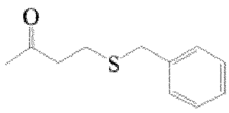, 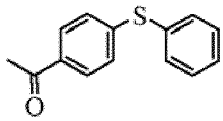,

ou une de leurs combinaisons.

**7.** Composition thermoplastique selon l'une quelconque des revendications précédentes, dans laquelle le composé stabilisant contenant du soufre est soluble dans un solvant organique pour le copolycarbonate et est pratiquement insoluble dans un solvant aqueux à un pH inférieur à 11.

**8.** Composition thermoplastique selon l'une quelconque des revendications précédentes, dans laquelle le composé stabilisant contenant du soufre comprend une chaîne hydrocarbonée en $C_6$ à $C_{40}$, de préférence une chaîne hydrocarbonée en $C_{10}$ à $C_{30}$, mieux encore un groupe alkyle en $C_6$ à $C_{40}$ ou un groupe alkyle en $C_{10}$ à $C_{30}$.

**9.** Composition thermoplastique selon l'une quelconque des revendications précédentes, dans laquelle le composé stabilisant contenant du soufre est le thiodipropionate de dilauryle, le thiodipropionate de dicétyle, le thiodipropionate de dimyristyle, le thiodipropionate de distéaryle, le thiodipropionate de ditridécyle, le bis[3-(dodécylthio)propionate de 2-bis[[3-(dodécylthio)-1-oxopropoxy]méthyl]propane-1,3-diyle, ou une de leurs combinaisons.

**10.** Composition thermoplastique selon l'une quelconque des revendications précédentes, comprenant en outre une source de soufre ajouté qui est un stabilisant sulfonique organique présent en une quantité efficace pour fournir 2 à 40 ppm, ou 2 à 20 ppm, ou 4 à 15 ppm, ou 4 à 10 ppm, ou 4 à 8 ppm en poids de soufre ajouté, sur la base des parties totales en poids du copolycarbonate.

**11.** Composition thermoplastique selon l'une quelconque des revendications précédentes, ayant une ou plusieurs des propriétés suivantes :

moins de 5 parties par million en poids de chacun parmi le lithium, le sodium, le potassium, le calcium, le magnésium, l'ammonium, le chlore, le brome, le fluor, le nitrite, le nitrate, le phosphate, le phosphate, le sulfate, le formiate, l'acétate, le citrate, l'oxalate, le triméthylammonium, le triéthylammonium, ou une de leurs combinaisons, telles que mesurées par chromatographie ionique ;
le copolycarbonate fortement résistant à la chaleur est préparé à partir de monomères parmi lesquels un ou plusieurs des monomères ont une pureté d'au moins 99,6 %, d'au moins 99,7 %, ou d'au moins 99,8 %, telle que déterminée par chromatographie liquide haute performance ; ou
un indice de jaunissement inférieur ou égal à 30, ou inférieur à 20, ou inférieur à 10, ou inférieur ou égal à 5, tel que mesuré conformément à la norme ASTM D1925 sur une plaque de 3,2 mm.

**12.** Composition thermoplastique selon l'une quelconque des revendications précédentes, dans laquelle le monomère hydroxyle aromatique fortement résistant à la chaleur et le monomère hydroxyle aromatique faiblement résistant à la chaleur ont une teneur en soufre inférieure à 5 parties par million en poids.

**13.** Méthode de préparation du copolycarbonate de l'une quelconque des revendications précédentes, la méthode comprenant la polymérisation d'une composition comprenant :

2 à 95 % en moles du monomère dihydroxy aromatique fortement résistant à la chaleur,
5 à 98 % en moles du monomère dihydroxy aromatique faiblement résistant à la chaleur, de préférence le bisphénol A,
dans chaque cas sur la base de la somme des moles des motifs carbonates ; et
une source de soufre ajouté qui est un composé stabilisant contenant du soufre, dans laquelle le composé stabilisant contenant du soufre est présent en une quantité efficace pour fournir 5 à 50 parties par million en poids de soufre ajouté, sur la base des parties totales en poids du copolycarbonate.

**14.** Article comprenant la composition thermoplastique de l'une quelconque des revendications précédentes, lequel article est éventuellement un objectif d'appareil photographique, une lentille de capteur, une lentille d'éclairage, une lentille de verre de sécurité, une lentille correctrice ophtalmique, ou une lentille d'imagerie ; ou éventuellement dans lequel une surface de l'article est doté d'un revêtement dur ou est métallisée.

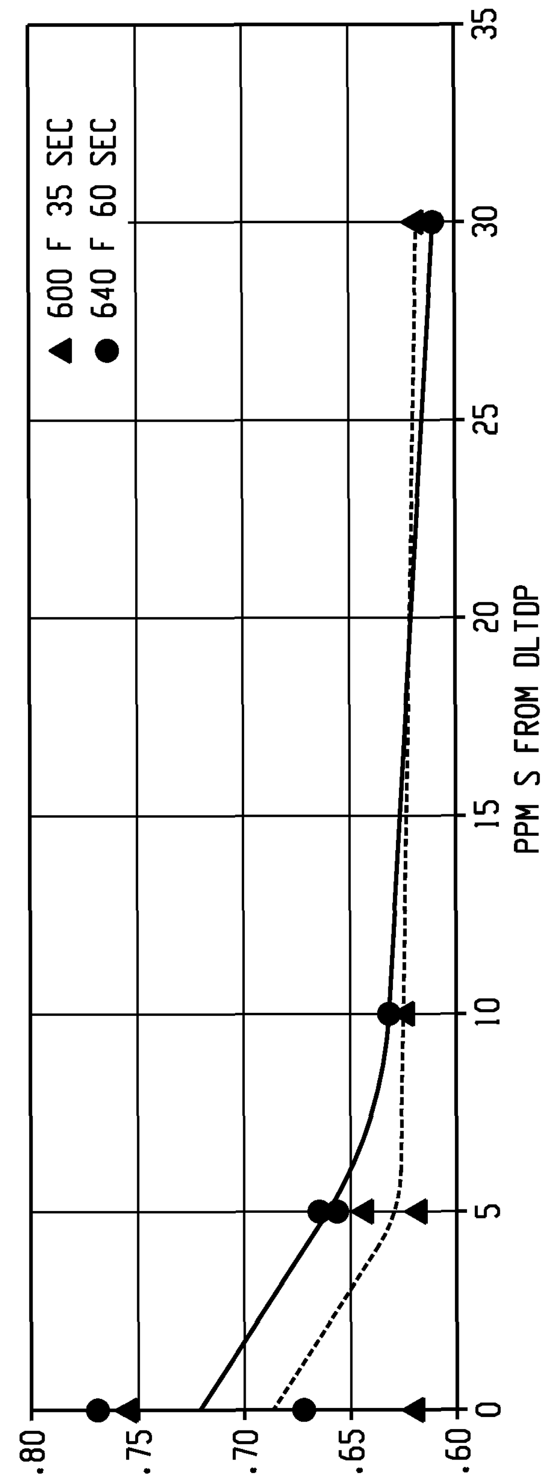

▲ 600 F 35 SEC
● 640 F 60 SEC
PPM S FROM DLTDP
YI (D192 5, 12 5 mil)
0
5
10
15
20
25
30
35
1.80
1.75
1.70
1.65
1.60


*Fig. 1*

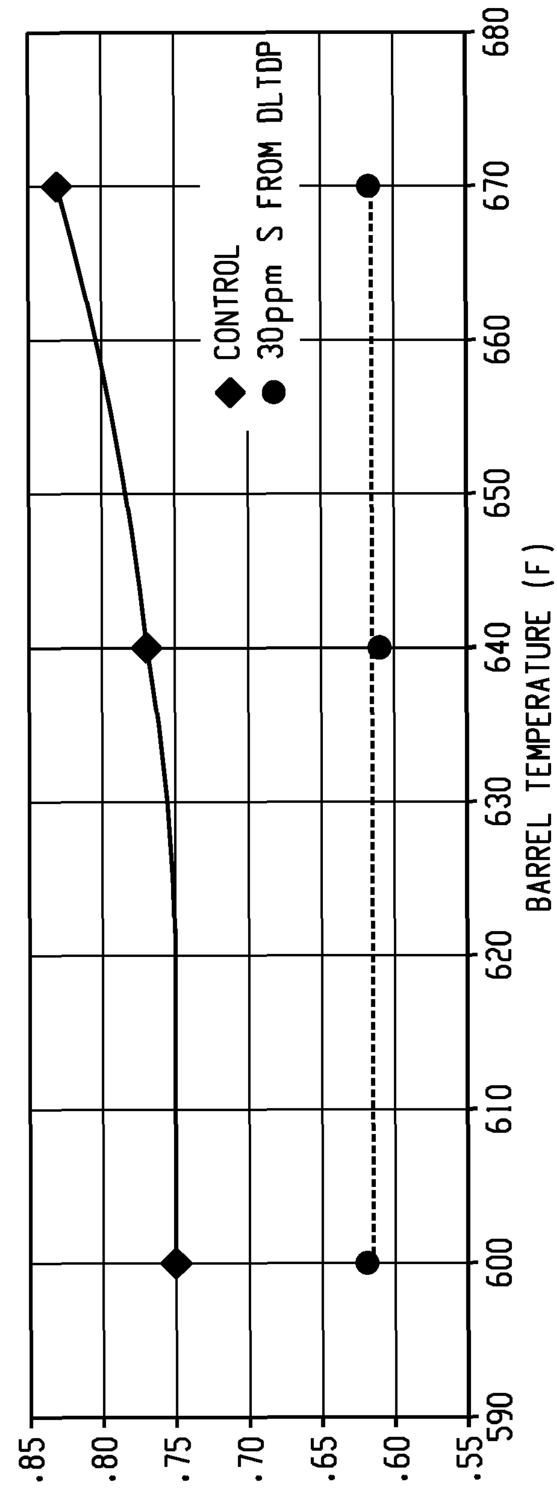

◆ CONTROL
● 30ppm S FROM DLTDP
BARREL TEMPERATURE (F)
YI (D192 5, 12 5 mil)
590
600
610
620
630
640
650
660
670
680
1.85
1.80
1.75
1.70
1.65
1.60
1.55


*Fig. 2*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013175448 A1
- US 20140295363 A
- WO 2014072923 A
- WO 2015159246 A
- WO 2018020425 A
- WO 2014036254 A
- WO 2014072923 A1
- US 20160237210 A
- US 9287471 B
- US 20120157653 A
- US 20180066135 A


### Non-patent literature cited in the description


- **L.L. YU ; W.R. KELLY ; J.D. FASSETT ; R.D. VOCKE.** *J. Anal. At. Spectrum.,* 2001, vol. 16, 140-145
- **R. THOMAS.** *Spectroscopy,* 2002, vol. 17, 42-48
- **D.R. BANDURA ; V.I. BARANOV ; S.D. TANNER.** *Anal. Chem.,* 2002, vol. 74, 1497-1502